# EUROPEAN PATENT APPLICATION

(11) **EP 4 686 244 A1**
(43) Date of publication of application: **28.01.2026**
(21) Application number: 24784116.6
(22) Date of filing: 26.03.2024
(51) Int. Cl.: H04W 12/06

(54) **AUTHENTICATION METHOD AND APPARATUS**

(30) Priority: 07.04.2023 CN 202310417649
(71) Applicant: Huawei Technologies Co., Ltd., Shenzhen, Guangdong 518129 (CN)
(72) Inventor: HU, Li, Shenzhen, Guangdong 518129 (CN); XU, Yishan, Shenzhen, Guangdong 518129 (CN); WU, Rong, Shenzhen, Guangdong 518129 (CN)
(74) Representative: Isarpatent
(86) International application number: PCT/CN2024/083866
(87) International publication number: WO 2024/208031

(57) **Abstract**

An authentication method and an apparatus are provided. The method includes: obtaining an identifier of a serving network and an identifier of a terminal device, and generating a serving network name, where the serving network is a network accessed by a terminal device in a non-3GPP access mode, the serving network provides a service of an NSWO, and the serving network name includes information about the NSWO and the identifier of the serving network; and sending a first request message to an authentication service functional entity, where the first request message is used to request to authenticate the terminal device, and the first request message includes the serving network name and the identifier of the terminal device. The foregoing design allows the serving network name to include the identifier of the serving network, enabling verification of the network accessed by the terminal device in the non-3GPP access mode, and optimizing an authentication process of the terminal device.

## Description

### CROSS-REFERENCE TO RELATED APPLICATIONS

This application claims priority to Chinese Patent Application No. 202310417649.2, filed with the China National Intellectual Property Administration on April 7, 2023 and entitled "AUTHENTICATION METHOD AND APPARATUS", which is incorporated herein by reference in its entirety.

### TECHNICAL FIELD

Embodiments of this application relate to the field of wireless communication, and in particular, to an authentication method and an apparatus.

### BACKGROUND

Currently, a 3rd generation partnership project (3rd generation partnership project, 3GPP) network supports a non-seamless WLAN offload (non-seamless WLAN offload, NSWO) networking mode.

In this networking mode, a terminal device may access the 3GPP network through a non-3GPP (N3GPP) network.Prior to accessing the 3GPP network through the non-3GPP network, the terminal device needs to be authenticated by using a 3GPP authentication function. After the terminal device is successfully authenticated, the terminal device may directly send data over the non-3GPP network.

However, there is a need to consider security authentication in the NSWO networking mode.

### SUMMARY

This application provides an authentication method and apparatus, to optimize an authentication process of a terminal device.

According to a first aspect, this application provides an authentication method. The method may be performed by a non-seamless wireless local area network offload functional entity or a module (for example, a chip) in a non-seamless wireless local area network offload functional entity. The method includes: obtaining an identifier of a serving network and an identifier of a terminal device, where the serving network is a network accessed by the terminal device in a non-3GPP access mode, and the serving network provides a service of a NSWO; generating a serving network name, where the serving network name includes information about the NSWO and the identifier of the serving network; and sending a first request message to an authentication service functional entity, where the first request message is used to request to authenticate the terminal device, and the first request message includes the serving network name and the identifier of the terminal device.

According to the foregoing design, the serving network name includes the identifier of the serving network, so that the network accessed by the terminal device in the non-3GPP access mode can be verified, the terminal device is not induced to access a non-3GPP access device in a network to which the terminal device belongs, and access security of the terminal device is improved.

In a possible design, generating the serving network name includes: generating the serving network name based on configuration information, where the configuration information indicates that a non-seamless wireless local area network offload functional entity is deployed in a non-public network. The configuration information may be further described as follows: The configuration information indicates a key derivation manner in which the identifier of the serving network is used as an input parameter, or a key derivation manner based on the identifier of the serving network, or the configuration information indicates that an NSWOF is deployed in an SNPN, or the configuration information indicates that an NSWOF is in a private network scenario.

The configuration information may be configured by an administrator for the non-seamless wireless local area network offload functional entity, or the configuration information may be file configuration information of the non-seamless wireless local area network offload functional entity.

According to the foregoing design, when it is identified that the non-seamless wireless local area network offload functional entity is deployed in the non-public network, the non-seamless wireless local area network offload functional entity can generate the serving network name.

In a possible design, when the file configuration information of the non-seamless wireless local area network offload functional entity includes a non-public network identifier, the serving network name is generated.

In a possible design, generating the serving network name includes: generating the serving network name when the identifier of the terminal device is an anonymous subscription concealed identifier SUCI.

In a possible design, generating the serving network name includes: generating the serving network name when the identifier of the terminal device is in a decorated network access identifier format.

In a possible design, generating the serving network name when the identifier of the terminal device is in the decorated network access identifier format includes:
generating the serving network name when the identifier of the terminal device is in the decorated network access identifier format and another domain part of the identifier of the terminal device includes a public network identifier, so that the non-seamless wireless local area network offload functional entity can generate the serving network name when it is identified that the terminal device is in a roaming scenario; or generating the serving network name when the identifier of the terminal device is in the decorated network access identifier format and another domain part of the identifier of the terminal device includes a non-public network identifier, so that the non-seamless wireless local area network offload functional entity can generate the serving network name when it is identified that the authentication service functional entity and a data management functional entity are CHs.

Through determining in the foregoing different scenarios, the NSWOF may determine, for different scenarios, whether the serving network name including the identifier of the serving network needs to be generated, that is, a new serving network name, so that whether a new serving network name needs to be generated can be flexibly configured for different scenarios, and this is also compatible to an existing NSWO authentication procedure.

In a possible design, the public network identifier includes a public land mobile network identifier but does not include a network identifier; and the non-public network element identifier includes a public land mobile network identifier and a network identifier.

In a possible design, obtaining the identifier of the serving network includes: receiving the identifier of the serving network from a non-3GPP access device.

In a possible design, obtaining the identifier of the serving network includes: determining the identifier of the serving network based on the identifier of the terminal device.

In a possible design, determining the identifier of the serving network based on the identifier of the terminal device includes: using an identifier included in the another domain part of the identifier of the terminal device as the identifier of the serving network, where the identifier of the terminal device is in the decorated network access identifier format.

In a possible design, determining the identifier of the serving network based on the identifier of the terminal device includes: using, as the identifier of the serving network, an identifier of a network to which the terminal device belongs when the identifier of the terminal device is in a network access identifier format that does not include another domain.

In addition, the non-seamless wireless local area network offload functional entity may further determine correctness of the obtained identifier of the serving network.

In a possible design, the information about the NSWO is represented by a fixed character string "5G:NSWO".

According to a second aspect, this application provides an authentication method. The method may be performed by a data management functional entity or a module (for example, a chip) in a data management functional entity. The method includes: receiving a serving network name and an identifier of a terminal device from an authentication service functional entity, where the serving network name includes information about an NSWO and an identifier of a serving network, the serving network is a network accessed by the terminal device in a non-3GPP access mode, and the serving network provides a service of the NSWO; determining, based on the identifier of the serving network, an extensible authentication protocol EAP authentication method used to authenticate the terminal device; and sending indication information to the authentication service functional entity, where the indication information indicates the EAP authentication method.

According to the foregoing design, the data management functional entity can select an appropriate EAP authentication method from a plurality of EAP authentication methods, to eliminate a limitation in the conventional technology that only an EAP-AKA' algorithm can be selected after an NSWO indication is received, and resolve a backward compatibility problem of selecting an EAP authentication method.

In a possible design, determining, based on the identifier of the serving network, the EAP authentication method used to authenticate the terminal device includes: when the identifier of the serving network is a public network identifier, determining that the EAP authentication method is an extensible authentication protocol authentication and key agreement EAP-AKA' authentication method; or when the identifier of the serving network is a non-public network identifier, determining the EAP authentication method based on subscription information of the terminal device, where the EAP authentication method is one of the following: an EAP-AKA' authentication method, an extensible authentication protocol transport layer security EAP-TLS authentication method, or an extensible authentication protocol tunneled transport layer security EAP-TTLS authentication method.

In a possible design, the method further includes: receiving an NSWO indication from the authentication service functional entity. Further, the method further includes: ignoring the NSWO indication if it is determined that the serving network name includes the identifier of the serving network. That a UDM ignores the NSWO indication may be understood as that the UDM no longer selects the EAP-AKA' authentication method based on the NSWO indication.

**In** a possible design, the method further includes: when the EAP authentication method is the EAP-AKA' authentication method, deriving a cipher key CK and an integrity key IK based on a key K; deriving a CK' and an IK' based on the CK, the IK, and the serving network name; and sending the CK' and the IK' to the authentication service functional entity.

**In** the foregoing design, the serving network name is used as a parameter for key derivation, so that the network accessed by the terminal device in the non-3GPP access mode can be verified, the terminal device is not induced to access a non-3GPP access device in a network to which the terminal device belongs, and access security of the terminal device is improved.

According to a third aspect, this application provides an authentication method. The method may be performed by an authentication service functional entity or a module (for example, a chip) in an authentication service functional entity. The method includes: obtaining a serving network name and an identifier of a terminal device, where the serving network name includes information about an NSWO and an identifier of a serving network, the serving network is a network accessed by the terminal device in a non-3GPP access mode, and the serving network provides a service of the NSWO; receiving indication information from a data management functional entity, where the indication information indicates an EAP authentication method used to authenticate the terminal device; and when the EAP authentication method is an EAP-TLS authentication method or an EAP-TTLS authentication method, generating a first key based on the serving network name.

In the foregoing design, when the EAP authentication method is the EAP-TLS authentication method or the EAP-TTLS authentication method, the authentication service functional entity uses the serving network name as a parameter for generating the first key. In addition, the terminal device generates the first key by using a same method. If the first keys generated by the authentication service functional entity and the terminal device are different, it may be determined that a non-3GPP access device does not disguise a network to which the non-3GPP access device belongs. It can be learned that, the serving network name includes the identifier of the serving network, and the serving network name is used as a parameter for key derivation, so that the network accessed by the terminal device in the non-3GPP access mode can be verified, the terminal device is not induced to access a non-3GPP access device in a network to which the terminal device belongs, and access security of the terminal device is improved.

In a possible design, the first key is an MSK.

In a possible design, generating the first key based on the serving network name includes: receiving a permanent subscription permanent identifier SUPI of the terminal device from the data management functional entity; and when the first key is generated based on the serving network name, generating the MSK based on a certificate associated with the EAP authentication method, the serving network name, and the SUPI.

In the foregoing design, the SUPI is used as a parameter for generating the MSK, so that correctness of the SUPI can be further ensured in a key derivation manner.

In a possible design, generating the first key based on the serving network name includes: generating the MSK based on the certificate associated with the EAP authentication method; and generating the first key based on the MSK and the serving network name.

In a possible design, generating the first key based on the serving network name includes: receiving the SUPI of the terminal device from the data management functional entity; and when the first key is generated based on the MSK and the serving network name, generating the first key based on the MSK, the SUPI, and the serving network name.

In a possible design, obtaining the serving network name and the identifier of the terminal device includes: receiving, by the authentication service functional entity, a first request message from a non-seamless wireless local area network offload functional entity, where the first request message is used to request to authenticate the terminal device, and the first request message includes the serving network name and the identifier of the terminal device.

According to the foregoing design, the authentication service functional entity may obtain the serving network name from the non-seamless wireless local area network offload functional entity.

In a possible design, obtaining the serving network name includes: receiving a first request message from a non-seamless wireless local area network offload functional entity, where the first request message is used to request to authenticate the terminal device, and the first request message includes the identifier of the terminal device; determining the identifier of the serving network based on the identifier of the terminal device; and generating the serving network name based on the identifier of the serving network.

According to the foregoing design, the authentication service functional entity may generate the serving network name independently.

In a possible design, determining the identifier of the serving network based on the identifier of the terminal device includes: using an identifier included in another domain part of the identifier of the terminal device as the identifier of the serving network, where the identifier of the terminal device is in a decorated network access identifier format.

In a possible design, determining the identifier of the serving network based on the identifier of the terminal device includes: using, as the identifier of the serving network, an identifier of a network to which the terminal device belongs when the identifier of the terminal device is in a network access identifier format that does not include another domain.

In a possible design, the first request message further includes an NSWO indication, and generating the serving network name based on the identifier of the serving network includes: generating the serving network name based on the identifier of the serving network in response to the NSWO indication.

In a possible design, generating the serving network name based on the identifier of the serving network includes: when the EAP authentication method is the EAP-TLS authentication method or the EAP-TTLS authentication method, generating the serving network name based on the identifier of the serving network.

According to a fourth aspect, this application provides an authentication method. The method may be performed by a terminal device or a module (for example, a chip) in a terminal device. The method includes: obtaining a serving network name, where the serving network name includes information about an NSWO and an identifier of a serving network, the serving network is a network accessed by the terminal device in a non-3GPP access mode, and the serving network provides a service of the NSWO; receiving indication information from an authentication service functional entity, where the indication information indicates an EAP authentication method used to authenticate the terminal device; and when the EAP authentication method is an EAP-TLS authentication method or an EAP-TTLS authentication method, generating a first key based on the serving network name.

In the foregoing design, when the EAP authentication method is the EAP-TLS authentication method or the EAP-TTLS authentication method, the terminal device uses the serving network name as a parameter for generating the first key. In addition, the authentication service functional entity generates the first key by using a same method. If the first keys generated by the terminal device and the authentication service functional entity are different, it may be determined that a non-3GPP access device does not disguise a network to which the non-3GPP access device belongs. It can be learned that, the serving network name includes the identifier of the serving network, and the serving network name is used as a parameter for key derivation, so that the network accessed by the terminal device in the non-3GPP access mode can be verified, the terminal device is not induced to access a non-3GPP access device in a network to which the terminal device belongs, and access security of the terminal device is improved.

In a possible design, obtaining the serving network name includes: receiving, from a non-3GPP access device, an identifier of a network to which the non-3GPP access device belongs, and using, as the identifier of the serving network, the identifier of the network to which the non-3GPP access device belongs; and generating the serving network name based on the identifier of the serving network.

According to the foregoing design, the terminal device may generate the serving network name independently.

In a possible design, obtaining the serving network name includes: receiving the serving network name from the authentication service functional entity.

In a possible design, the method further includes: receiving, from a non-3GPP access device, an identifier of a network to which the non-3GPP access device belongs; and determining that the identifier of the network to which the non-3GPP access device belongs is consistent with the identifier of the serving network.

In the foregoing design, the terminal device may determine whether the identifier of the network to which the non-3GPP access device belongs is consistent with the true identifier of the serving network. If the identifiers are consistent, it indicates that the non-3GPP access device does not disguise the network to which the non-3GPP access device belongs. Otherwise, it indicates that the non-3GPP access device disguises the network to which the non-3GPP access device belongs, so that the network accessed by the terminal device in the non-3GPP access mode can be verified, the terminal device is not induced to access a non-3GPP access device in a network to which the terminal device belongs, and access security of the terminal device is improved.

In a possible design, the first key is an MSK.

Generating the first key based on the serving network name includes: when the first key is generated based on the serving network name, generating the MSK based on a certificate associated with the EAP authentication method, the serving network name, and an SUPI of the terminal device.

In a possible design, generating the first key based on the serving network name includes: generating the MSK based on a certificate associated with the EAP authentication method; and generating the first key based on the MSK and the serving network name.

In a possible design, generating the first key based on the serving network name includes: when the first key is generated based on the MSK and the serving network name, generating the first key based on the MSK, the SUPI of the terminal device, and the serving network name.

In a possible design, generating the first key based on the serving network name includes: when the EAP authentication method is the EAP-TLS authentication method or the EAP-TTLS authentication method, and it is determined that the service of the NSWO is used, generating the first key based on the serving network name.

According to the foregoing design, the terminal device can determine a currently used service, and determine, based on a specific service, whether to generate the first key based on the serving network name.

According to a fifth aspect, this application provides an authentication method. The method may be performed by an authentication service functional entity or a module (for example, a chip) in an authentication service functional entity. The method includes: receiving a first request message from a non-seamless wireless local area network offload functional entity, where the first request message is used to request to authenticate a terminal device, and the first request message includes an identifier of the terminal device; determining an identifier of a serving network based on the identifier of the terminal device, where the serving network is a network accessed by the terminal device in a non-3GPP access mode, and the serving network provides a service of an NSWO; generating a serving network name, where the serving network name includes information about the NSWO and the identifier of the serving network; and sending the serving network name and the identifier of the terminal device to a data management functional entity.

According to the foregoing design, the authentication service functional entity can generate the serving network name, so that the network accessed by the terminal device in the non-3GPP access mode can be verified, the terminal device is not induced to access a non-3GPP access device in a network to which the terminal device belongs, and access security of the terminal device is improved.

In a possible design, generating the serving network name includes: generating the serving network name based on configuration information, where the configuration information indicates that the authentication service functional entity is deployed in a non-public network.

In a possible design, generating the serving network name includes: generating the serving network name when the identifier of the terminal device is an anonymous subscription concealed identifier SUCI.

In a possible design, generating the serving network name includes: generating the serving network name when the identifier of the terminal device is in a decorated network access identifier format.

In a possible design, generating the serving network name includes: generating the serving network name when the identifier of the terminal device is in the decorated network access identifier format and another domain part of the identifier of the terminal device includes a public network identifier; or generating the serving network name when the identifier of the terminal device is in the decorated network access identifier format and another domain part of the identifier of the terminal device includes a non-public network identifier.

Through determining in the foregoing different scenarios, an NSWOF may determine, for different scenarios, whether the serving network name including the identifier of the serving network needs to be generated, that is, a new serving network name, so that whether a new serving network name needs to be generated can be flexibly configured for different scenarios, and this is also compatible to an existing NSWO authentication procedure.

In a possible design, determining the identifier of the serving network includes: using an identifier included in the another domain part of the identifier of the terminal device as the identifier of the serving network, where the identifier of the terminal device is in the decorated network access identifier format.

In a possible design, determining the identifier of the serving network includes: using, as the identifier of the serving network, an identifier of a network to which the terminal device belongs when the identifier of the terminal device is in a network access identifier format that does not include another domain.

In a possible design, the first request message further includes an NSWO indication, and generating the serving network name includes: generating the serving network name in response to the NSWO indication.

In a possible design, generating the serving network name includes: when the EAP authentication method is an EAP-TLS authentication method or an EAP-TTLS authentication method, generating the serving network name based on the identifier of the serving network.

According to a sixth aspect, this application provides an authentication method. The method may be performed by a data management functional entity or a module (for example, a chip) in a data management functional entity. The method includes: receiving an NSWO indication from an authentication service functional entity; when it is determined that any one of a condition 1 to a condition 3 is met, determining, based on subscription information of a terminal device in response to the NWSO indication, an EAP authentication method used to authenticate the terminal device, where the EAP authentication method is one of the following: an EAP-AKA' authentication method, an EAP-TLS authentication method, and an EAP-TTLS authentication method, and the condition 1 is that an identifier of a network to which the data management functional entity belongs is a non-public network identifier; the condition 2 is that an identifier of the terminal device is received from the authentication service functional entity, the identifier of the terminal device is in a decorated network access identifier format, and another domain part of the identifier of the terminal device includes a non-public network identifier; and the condition 3 is that an identifier of the terminal device is received from the authentication service functional entity, and the identifier of the terminal device is an anonymous SUCI of the terminal device; and sending indication information to the authentication service functional entity, where the indication information indicates the EAP authentication method.

According to the foregoing design, the data management functional entity can select an appropriate EAP authentication method from a plurality of EAP authentication methods, to eliminate a limitation in the conventional technology that only an EAP-AKA' algorithm can be selected after an NSWO indication is received, and resolve a backward compatibility problem of selecting an EAP authentication method.

In a possible design, the method further includes: when the EAP authentication method is the EAP-AKA' authentication method, determining an identifier of a serving network based on the identifier of the terminal device, where the serving network is a network accessed by the terminal device in a non-3GPP access mode, and the serving network provides a service of the NSWO; generating a serving network name based on the identifier of the serving network, where the serving network name includes information about the NSWO and the identifier of the serving network; deriving a CK and an IK based on a key K; deriving a CK' and an IK' based on the CK, the IK, and the serving network name; and sending the CK' and the IK' to the authentication service functional entity.

According to a seventh aspect, this application provides an authentication method. The method may be performed by an authentication service functional entity or a module (for example, a chip) in an authentication service functional entity. The method includes: receiving a first request message from a non-seamless wireless local area network offload functional entity, where the first request message is used to request to authenticate a terminal device, and the first request message includes an identifier of the terminal device; receiving indication information from a data management functional entity, where the indication information indicates an EAP authentication method used to authenticate the terminal device, and the EAP authentication method is one of the following: an EAP-AKA' authentication method, an EAP-TLS authentication method, or an EAP-TTLS authentication method; and determining an identifier of a serving network based on the identifier of the terminal device after the indication information is received, and generating a serving network name, where the serving network is a network accessed by the terminal device in a non-3GPP access mode, the serving network provides a service of an NSWO, and the serving network name includes information about the NSWO and the identifier of the serving network.

According to the foregoing method, the authentication service functional entity may generate the serving network name after receiving the indication information.

In a possible design, the method further includes: when the EAP authentication method is the EAP-AKA' authentication method, sending the serving network name and the indication information to the terminal device.

In a possible design, the method further includes: when the EAP authentication method is the EAP-TLS authentication method or the EAP-TTLS authentication method, generating a first key based on the serving network name.

According to an eighth aspect, this application provides an authentication method. The method includes: A non-seamless wireless local area network offload functional entity obtains an identifier of a serving network and an identifier of a terminal device, where the serving network is a network accessed by the terminal device in a non-3GPP access mode, and the serving network provides a service of an NSWO; the non-seamless wireless local area network offload functional entity generates a serving network name, where the serving network name includes information about the NSWO and the identifier of the serving network; the non-seamless wireless local area network offload functional entity sends a first request message to an authentication service functional entity, where the first request message is used to request to authenticate the terminal device, and the first request message includes the serving network name and the identifier of the terminal device; after the authentication service functional entity receives the first request message from the non-seamless wireless local area network offload functional entity, the authentication service functional entity sends the serving network name and the identifier of the terminal device to a data management functional entity; after the data management functional entity receives the serving network name and the identifier of the terminal device from the authentication service functional entity, the data management functional entity determines, based on the identifier of the serving network, an EAP authentication method used to authenticate the terminal device; the data management functional entity sends indication information to the authentication service functional entity, where the indication information indicates the EAP authentication method; the authentication service functional entity sends the indication information to the terminal device; and the terminal device generates a key based on the serving network name after the terminal device receives the indication information from the authentication service functional entity.

In a possible design, the method further includes: after the authentication service functional entity receives the indication information from the data management functional entity, when the EAP authentication method is an EAP-TLS authentication method or an EAP-TTLS authentication method, the authentication service functional entity generates a first key based on the serving network name; or when the EAP authentication method is an EAP-TLS authentication method or an EAP-TTLS authentication method, the terminal device generates a first key based on the serving network name.

In a possible design, the method further includes: when the EAP authentication method is an EAP-AKA' authentication method, the data management functional entity derives a CK and an IK based on a key K, and derives a CK' and an IK' based on the CK, the IK, and the serving network name; the data management functional entity further sends an SUPI of the terminal device, the CK', and the IK' to the authentication service functional entity; after the authentication service functional entity receives the indication information, the SUPI of the terminal device, the CK', and the IK' from the data management functional entity, the authentication service functional entity generates an MSK based on the SUPI of the terminal device, the CK', and the IK'; and the authentication service functional entity further sends the serving network name to the terminal device; or when the EAP authentication method is the EAP-AKA' authentication method, the terminal device derives the CK and the IK based on the key K, derives the CK' and the IK' based on the CK, the IK, and the serving network name, and generates the MSK based on the SUPI of the terminal device, the CK', and the IK'.

According to a ninth aspect, this application provides an authentication method. The method includes: An authentication service functional entity receives a first request message from a non-seamless wireless local area network offload functional entity, where the first request message is used to request to authenticate a terminal device, the first request message includes an identifier of the terminal device; the authentication service functional entity determines an identifier of a serving network based on the identifier of the terminal device, where the serving network is a network accessed by the terminal device in a non-3GPP access mode, and the serving network provides a service of a NSWO; the authentication service functional entity generates a serving network name, where the serving network name includes information about the NSWO and the identifier of the serving network; the authentication service functional entity sends the serving network name and the identifier of the terminal device to a data management functional entity; after the data management functional entity receives the serving network name and the identifier of the terminal device from the authentication service functional entity, the data management functional entity determines, based on the identifier of the serving network, an EAP authentication method used to authenticate the terminal device; the data management functional entity sends indication information to the authentication service functional entity, where the indication information indicates the EAP authentication method; the authentication service functional entity sends the indication information to the terminal device; and after the terminal device receives the indication information from the authentication service functional entity, the terminal device generates a key based on the serving network name.

In a possible design, the method further includes: after the authentication service functional entity receives the indication information from the data management functional entity, when the EAP authentication method is an EAP-TLS authentication method or an EAP-TTLS authentication method, the authentication service functional entity generates a first key based on the serving network name; or when the EAP authentication method is an EAP-TLS authentication method or an EAP-TTLS authentication method, the terminal device generates a first key based on the serving network name.

In a possible design, the method further includes: when the EAP authentication method is an EAP-AKA' authentication method, the data management functional entity derives a CK and an IK based on a key K, and derives a CK' and an IK' based on the CK, the IK, and the serving network name; the data management functional entity further sends an SUPI of the terminal device, the CK', and the IK' to the authentication service functional entity; after the authentication service functional entity receives the indication information, the SUPI of the terminal device, the CK', and the IK' from the data management functional entity, the authentication service functional entity generates an MSK based on the SUPI of the terminal device, the CK', and the IK'; and the authentication service functional entity further sends the serving network name to the terminal device; or when the EAP authentication method is the EAP-AKA' authentication method, the terminal device derives the CK and the IK based on the key K, derives the CK' and the IK' based on the CK, the IK, and the serving network name, and generates the MSK based on the SUPI of the terminal device, the CK', and the IK'.

According to a tenth aspect, this application provides a communication apparatus, including units configured to perform steps in any one of the foregoing aspects.

According to an eleventh aspect, an embodiment of this application provides a communication device, including at least one processing element and at least one storage element. The at least one storage element is configured to store a program and data. The at least one processing element is configured to read and execute the program and the data that are stored in the storage element, so that the method according to any one of the foregoing aspects of this application is implemented.

According to a twelfth aspect, this application further provides a computer program. When the computer program is run on a computer, the computer is enabled to perform the method according to any one of the foregoing aspects.

According to a thirteenth aspect, this application further provides a computer-readable storage medium. The computer-readable storage medium stores a computer program. When the computer program is executed by a computer, the computer is enabled to perform the method according to any one of the foregoing aspects.

According to a fourteenth aspect, this application further provides a chip. The chip is configured to read a computer program stored in a memory, to perform the method according to any one of the foregoing aspects.

According to a fifteenth aspect, this application further provides a chip system. The chip system includes a processor, configured to support a computer apparatus in implementing the method according to any one of the foregoing aspects. In a possible design, the chip system further includes a memory, and the memory is configured to store a program and data that are necessary for the computer apparatus. The chip system may include a chip, or may include a chip and another discrete component.

According to a sixteenth aspect, this application provides a communication system, including a non-seamless wireless local area network offload functional entity, an authentication service functional entity, a data management functional entity, and/or a terminal device. The non-seamless wireless local area network offload functional entity performs any one of the possible designs in the first aspect, the data management functional entity performs any one of the possible designs in the second aspect, the authentication service functional entity performs any one of the possible designs in the third aspect, and the terminal device performs any one of the possible designs in the fourth aspect. In addition, the communication system may further include a non-3GPP access device.

According to a seventeenth aspect, this application provides a communication system, including a non-seamless wireless local area network offload functional entity, an authentication service functional entity, a data management functional entity, and/or a terminal device. The data management functional entity performs any one of the possible designs in the second aspect, the authentication service functional entity performs any one of the possible designs in the third aspect and the fifth aspect, and the terminal device performs any one of the possible designs in the fourth aspect. In addition, the communication system may further include a non-3GPP access device.

In this application, based on the implementations provided in the foregoing aspects, the implementations may be further combined to provide more implementations.

### BRIEF DESCRIPTION OF DRAWINGS

FIG. 1 is a diagram of a public network architecture and a private network architecture of a 5G NSWO according to this application;
FIG. 2 is a diagram of a roaming architecture of a 5G NSWO according to this application;
FIG. 3 is a diagram of an AUSF/UDM of a 5G NSWO serving as a CH according to this application;
FIG. 4 is a specific flowchart of a UE authentication process in a public network architecture of a 5G NSWO according to this application;
FIG. 5 is an overview flowchart of an authentication method according to this application;
FIG. 6 is an overview flowchart of another authentication method according to this application;
FIG. 7 is an overview flowchart of still another authentication method according to this application;
FIG. 8 is an overview flowchart of yet another authentication method according to this application;
FIG. 9 is a diagram of a structure of a communication apparatus according to this application; and
FIG. 10 is a diagram of a structure of another communication apparatus according this application.

### DESCRIPTION OF EMBODIMENTS

In embodiments of this application, "at least one" means one or more, and "a plurality of" means two or more than two. The term "and/or" describes an association relationship between associated objects, and indicates that three relationships may exist. For example, A and/or B may indicate the following cases: Only A exists, both A and B exist, and only B exists, where A and B may be singular or plural. The character "/" usually indicates an "or" relationship between the associated objects. "At least one of the following" or a similar expression thereof indicates any combination of these items, including a single item or any combination of a plurality of items. For example, at least one (piece) of a, b, or c may represent a, b, c, a and b, a and c, b and c, or a, b and c, and each of a, b, c may be an element, or may be a set including one or more elements.

In this application, "example", "in some embodiments", "in some other embodiments", or the like is used to represent giving an example, an illustration, or a description. Any embodiment or design scheme described as an "example" in this application should not be explained as being more preferred or having more advantages than another embodiment or design scheme. Exactly, the term "example" is for presenting a concept in a specific manner.

"Of (of)", "corresponding (corresponding, relevant)", and "corresponding (corresponding)" in this application may be interchangeably used sometimes. It should be noted that expressed meanings are the same when differences are not emphasized. In embodiments of this application, communication and transmission may be interchangeably used sometimes. It should be noted that expressed meanings are the same when differences are not emphasized. For example, transmission may include sending and/or receiving, and may be a noun or a verb.

It should be noted that in embodiments of this application, words such as "first" and "second" are merely used for purpose of distinguishing descriptions, and cannot be understood as an indication or implication of relative importance or an indication or implication of a sequence.

The following briefly describes a device or a functional module in this application.

A terminal device may also be referred to as a terminal, user equipment (user equipment, UE), a mobile station, a mobile terminal, or the like. The terminal device may be widely used in various scenarios, for example, device-to-device (device-to-device, D2D), vehicle-to-everything (vehicle to everything, V2X) communication, machine-type communication (machine-type communication, MTC), internet of things (internet of things, IOT), virtual reality, augmented reality, industrial control, self-driving, telemedicine, smart grid, smart furniture, smart office, smart wearable, smart transportation, and smart city. The terminal may be a mobile phone, a tablet computer, a computer with a wireless transceiver function, a wearable device, a vehicle, an airplane, a ship, a robot, a robotic arm, a smart home device, or the like. A specific technology and a specific device form that are used by the terminal device are not limited in embodiments of this application.

A non-3GPP access device may also be referred to as a non-3GPP access network, and is a device accessed by a terminal device in a non-3GPP access mode.

For example, the non-3GPP access mode may include a wireless fidelity (wireless fidelity, Wi-Fi) access mode. The terminal device may establish a connection to a wireless local area network access network (wireless local area network access network, WLAN AN).

The WLAN is formed by using a wireless channel instead of a wired transmission medium to connect two or more devices, and may be applicable to any protocol in the Institute of Electrical and Electronics Engineers (institute of electrical and electronics engineers, IEEE) 802.11 series protocols. Typical deployment scenarios include a home, a school, a campus, and an enterprise office building.

A non-seamless wireless local area network offload function (non-seamless WLAN offload function, NSWOF) functional entity performs protocol conversion and discovery of an authentication service functional entity. The NSWOF functional entity is responsible for communicating with a WLAN AN through a Swa interface and communicating with an authentication service functional entity through a service-based interface (service-based interface, SBI) interface. A name of the NSWOF functional entity is not limited in embodiments of this application, and the name of the NSWOF functional entity may also be changed in future communication. In the following embodiments, the NSWOF functional entity is merely used as an example for description. For ease of description, the NSWOF functional entity is referred to as NSWOF for short.

An authentication service functional entity is mainly used for user authentication and the like, and may process authentication requests of 3GPP and non-3GPP access. In 5th generation (5th Generation, 5G) communication, the authentication service functional entity may be an authentication service function (authentication service function, AUSF) functional entity, and in future communication like 6th generation (6th Generation, 6G) communication, the authentication service functional entity may still be an AUSF functional entity or may have another name. This is not limited in this application. In the following embodiments, the AUSF functional entity is merely used as an example for description. For ease of description, the AUSF functional entity is referred to as AUSF for short.

A data management functional entity manages subscription information of a user, completes user authentication and authorization, and is used to process a user identifier, subscription, access authentication, registration, mobility management, or the like. In 5G communication, the data management functional entity may be a unified data management (unified data management, UDM) network element. In future communication like 6G communication, the data management functional entity may still be a UDM functional entity or may have another name. This is not limited in this application. In the following embodiments, the UDM functional entity is merely used as an example for description. For ease of description, the UDM functional entity is referred to as UDM for short.

An authentication, authorization, and accounting (authentication, authorization, accounting, AAA) proxy is used to proxy an AAA protocol. The AAA proxy can process a user access request and provide an authentication, authorization, and accounting service. The AAA proxy works with a network access control, a gateway server, a database, and a user information directory.

It should be further understood that the authentication service functional entity, the data management functional entity, and the non-seamless wireless local area network offload functional entity may be understood as functional entities configured to implement different functions. The foregoing names are merely used to distinguish between different functions, and should not constitute any limitation on this application. This application does not exclude a possibility of using other names in a 5G network and another future network, and the foregoing names do not represent that these network elements are independent physical devices. For example, specific forms of the foregoing functional entities are not limited in this application, may be integrated into a same physical device, or may be separately different physical devices. For another example, a network slice may be combined as required.

It should be noted that the foregoing "functional entity" may also be referred to as a network element, an entity, a device, an apparatus, a module, or the like. This is not particularly limited in this application.

This application may be applied to a service. The service means that a terminal device connects to a non-3GPP network (for example, a WLAN) by using a credential of a 3GPP system, to access a network, and the terminal device does not need to register with the 3GPP system.

For example, the 3GPP system is a 5G system, and the service may also be referred to as a 5G NSWO. The 5G NSWO is a capability provided by the 5G system and the terminal device, and may be connected to a WLAN access network by using a credential of the 5G system without registering with the 5G system.

The following describes a possible network structure to which this application is applied.

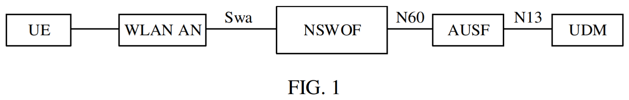

A public network architecture and a private network architecture of a 5G NSWO are shown in FIG. 1.

In FIG. 1, an NSWOF is connected to a non-3GPP access network (for example, a WLAN AN) through a Swa interface, and is connected to an AUSF through an N60 interface. The AUSF is connected to a UDM through an N13 interface. The NSWOF performs protocol conversion between the Swa interface and the N60 interface. UE, the WLAN AN, the NSWOF, the AUSF, and the UDM are located on a same network. In this case, the network is a home network of the UE, and is also a serving network of the UE. If the network is a public network, the network architecture shown in FIG. 1 is the public network architecture of the 5G NSWO. If the network is a non-public network, the network architecture shown in FIG. 1 is the private network architecture of the 5G NSWO. For example, the public network may be a public land mobile network (public land mobile network, PLMN). An identifier of the public network includes a public land mobile network identifier, and does not include a network identifier. For example, the identifier of the public network is a PLMN ID. The non-public network may be a standalone non-public network (standalone non-public network, SNPN). An identifier of the non-public network includes a public land mobile network identifier and a network identifier. For example, the identifier of the non-public network includes a PLMN ID and a network identifier (network identification, NID).

In this application, the public network and the PLMN may be replaced with each other, and the non-public network, the private network, and the SNPN may be replaced with each other.

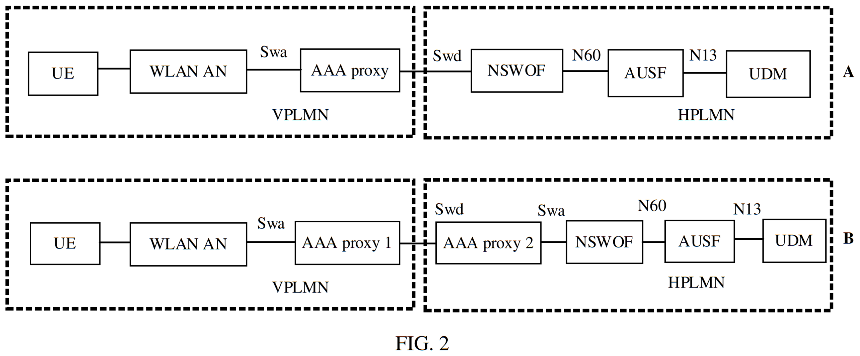

A roaming architecture of a 5G NSWO is shown in FIG. 2.

In A in FIG. 2, UE, a WLAN AN, and an AAA proxy are deployed in a same network, and the network is a visited public land mobile network (visited PLMN, VPLMN) of the UE, that is, a serving network (serving network, SN) of the UE. An NSWOF, an AUSF, and a UDM are deployed on a same network, and the network is a home public land mobile network (home PLMN, HPLMN) of the UE, that is, a home network of the UE. In this case, the home network and the serving network of the UE are different. A non-3GPP access network (for example, a WLAN AN) is connected to the AAA proxy through a Swa interface, the NSWOF is connected to the AAA proxy through a Swd interface, and is connected to the AUSF through an N60 interface. The AUSF is connected to the UDM through an N13 interface.

In B in FIG. 2, UE, a WLAN AN, and an AAA proxy 1 are deployed in a same network, and the network is a VPLMN of the UE, that is, a serving network of the UE. An AAA proxy 2, an NSWOF, an AUSF, and a UDM are deployed in a same network, and the network is an HPLMN of the UE, that is, a home network of the UE. In this case, the home network and the serving network of the UE are different. A non-3GPP access network (for example, a WLAN AN) is connected to the AAA proxy 1 through a Swa interface, the AAA proxy 1 is connected to the AAA proxy 2 through a Swd interface, the NSWOF is connected to the AAA proxy 2 through a Swa interface, and is connected to the AUSF through an N60 interface. The AUSF is connected to the UDM through an N13 interface.

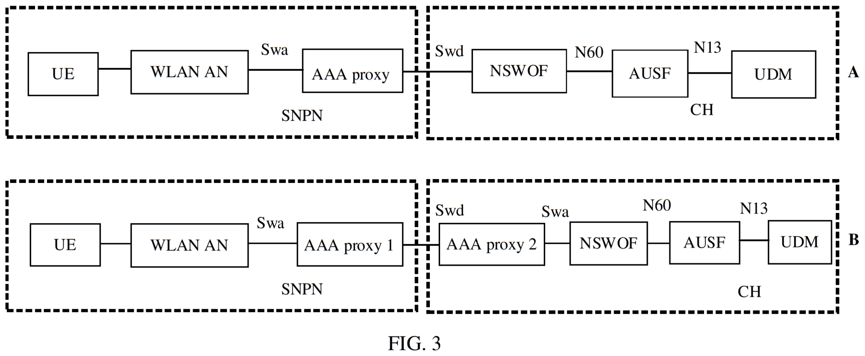

An SNPN architecture in which an AUSF/UDM of a 5G NSWO serves as a credential holder (credentials holder, CH) is shown in FIG. 3.

In A in FIG. 3, UE, a WLAN AN, and an AAA proxy are deployed in a same network, the network is an SNPN, and the network is a serving network of the UE. An NSWOF, an AUSF, and a UDM are deployed in a same network, and the network is a home network of the UE. In this case, the home network and the serving network of the UE are different. For a specific connection manner, refer to A in FIG. 3. Details are not described herein again.

In B in FIG. 3, UE, a WLAN AN, and an AAA proxy 1 are deployed in a same network, the network is an SNPN, and the network is a serving network of the UE. An AAA proxy 2, an NSWOF, an AUSF, and a UDM are deployed in a same network, and the network is a home network of the UE. In this case, the home network and the serving network of the UE are different. For a specific connection manner, refer to B in FIG. 3. Details are not described herein again.

It should be understood that, the network architectures shown in FIG. 1, FIG. 2, and FIG. 3 may be applied to embodiments of this application. In addition, a network architecture applicable to embodiments of this application is not limited thereto. Any network architecture that can implement functions of the foregoing network elements is applicable to embodiments of this application.

It should be further understood that names of the interfaces between the network elements in FIG. 1, FIG. 2, and FIG. 3 are merely examples. In specific implementations, names of the interfaces may be other names. This is not specifically limited in this application.

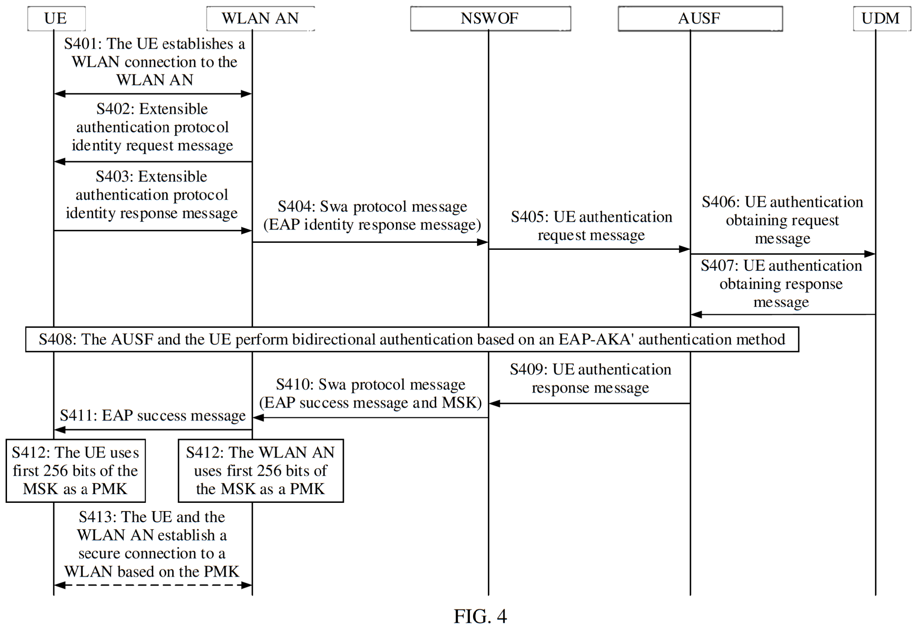

Currently, an authentication process of A terminal device has a defect. The following specifically describes, with reference to FIG. 4, an authentication process of UE in a public network architecture of a 5G NSWO.

S401: UE establishes a WLAN connection to a WLAN AN.

For example, the UE establishes the WLAN connection to the WLAN AN based on a procedure defined in the IEEE 802.11.

S402: The WLAN AN sends an extensible authentication protocol (extensible authentication protocol, EAP) identity request (Identity Request) message to the UE, where the EAP identity request message is used to request to obtain a subscription concealed identifier (subscription concealed identifier, SUCI) of the UE.

S403: The UE sends an EAP identity response (EAP Identity Response) message to the WLAN AN, where the EAP identity response message carries the SUCI of the UE.

When a WLAN AN, an NSWOF, an AUSF, and a UDM belong to a same network, that is, in the public network architecture of the 5G NSWO or the private network architecture of the 5G NSWO shown in FIG. 1, the SUCI is in a general format, which is different from a decorated network access identifier (decorated network access identity, decorated NAI) format that the following SUCI is in. In this case, the SUCI does not include another domain (otherrealm) part, and a specific format of the SUCI is username@homerealm. A home domain (homerealm) refers to a home network of the UE, that is, a network to which the WLAN AN, the NSWOF, the AUSF, and the UDM belong. If the home network of the UE is a PLMN, the homerealm may be represented by using a PLMN ID. If the home network of the UE is an SNPN, the homerealm may be represented by using an SNPN ID, that is, may be represented by using a PLMN ID+NID. Specifically, SNPN ID = PLMN ID+NID.

When the WLAN AN and the NSWOF belong to different networks, a network to which the WLAN AN belongs is a serving network of the UE, and a network to which the NSWOF, the AUSF, and the UDM belong is a home network of the UE. In other words, in the network architecture of the 5G NSWO shown in FIG. 2 or FIG. 3, the SUCI is in a decorated NAI format, and is specifically homerealm! username@otherrealm. The otherrealm indicates a serving network of the UE. If the serving network of the UE is a PLMN, the otherrealm may be represented by using a PLMN ID. In this case, the UE is in a roaming state. If the serving network of the UE is an SNPN, the otherrealm may be represented by using a PLMN ID+NID. In this case, the AUSF and the UDM are used as CHs.

The UE may obtain, based on a broadcast message of the WLAN AN, an identifier of the network to which the WLAN AN belongs, that is, obtain an identifier included in the otherrealm part.

S404: The WLAN AN sends a Swa protocol message (Swa protocol message) to the NSWOF through the Swa interface. The Swa protocol message includes the EAP identity response message.

S405: The NSWOF sends a UE authentication request (Nausf_UEAuthentication_Authenticate Request) message to the AUSF, where the message includes the SUCI, a serving network name (serving network name), and an NSWO indication (indicator). The NSWO indication indicates, to the AUSF, that the authentication request is used for an NSWO purpose. The serving network name is a fixed character string "5G:NSWO".

The NSWOF sets the serving network name to the fixed character string "5G:NSWO".

S406: The AUSF sends a UE authentication obtaining request (Nudm_UEAuthentication_Get Request) message to the UDM, where the message includes the SUCI, the serving network name, and the NSWO indication.

S407: The UDM sends a UE authentication obtaining response (Nudm_UEAuthentication_Get Response) message to the AUSF, where the message includes an SUPI, a CK', an IK', and a selected EAP authentication method.

For example, after receiving the UE authentication obtaining request message, the UDM invokes a subscription identifier de-concealing function (subscription identifier de-concealing function, SIDF), and decrypts the SUCI based on the function to obtain the SUPI. The UDM further selects an extensible authentication protocol authentication and key agreement (EAP authentication and key agreement, EAP-AKA') authentication method as the EAP authentication method based on the NSWO indication. The UDM derives a cipher key (cipher key, CK) and an integrity key (integrity key, IK) based on a root key K, and derives the CK' and the IK' based on the CK, the IK, and the serving network name.

S408: The AUSF and the UE perform bidirectional authentication based on the EAP-AKA' authentication method. For a specific procedure, refer to RFC 5448.

In the authentication process in S408, the AUSF carries the serving network name in a key derivation function input attribute (Attribute-key derivation-input, AT-KDF-INPUT) field and sends the key derivation function input attribute field to the UE.

S409: After authentication based on the EAP-AKA' authentication method succeeds, the AUSF sends a UE authentication response (Nausf_UEAuthentication_Authenticate Response) message to the NSWOF, where the message includes an EAP success (EAP-Success) message and an MSK. In addition, the message may further include the subscription permanent identifier (subscription permanent identifier, SUPI).

For example, the AUSF generates the MSK based on the NSWO indication, the CK', the IK', and the SUPI, and the AUSF does not generate a KAUSF.

S410: The NSWOF sends a Swa protocol message to the WLAN AN through the Swa interface, where the Swa protocol message includes the EAP success message and the master session key (master session key, MSK).

S411: The WLAN AN sends the EAP success message to the UE.

S412: The UE and the WLAN AN use first 256 bits (bit) of the MSK as a pairwise master key (pairwise master key, PMK).

It may be understood that, after receiving the EAP success message, the UE generates the MSK. Alternatively, the UE may generate the MSK in the authentication process in S408. This is not limited herein.

For example, the UE derives the CK and the IK based on the key K, derives the CK and the IK based on the CK and the IK and the serving network name, and finally generates the MSK based on the CK', the IK', and the SUPI.

S413: The UE and the WLAN AN establish a secure connection to the WLAN based on the PMK.

For example, the UE and the WLAN AN may use the PMK to perform a four-way handshake to establish the secure connection to the WLAN.

It should be further understood that names of messages (or signaling) transmitted between the following network elements are merely examples, and constitute no limitation on functions of the messages.

It can be learned from the foregoing process that the current authentication process mainly has the following defects:
(1) The serving network name is a preset fixed character string, which may cause a risk that the SN is not authenticated. Specifically, UE and a network side device (for example, a UDM or an AUSF) cannot identify whether a WLAN AN currently accessed by the UE is disguised as another network. If the WLAN AN currently accessed by the UE is disguised as another network, and does not broadcast an identifier of a network to which the WLAN AN belongs, but broadcasts an identifier of the another network, neither the UE nor the network side device can identify the network. An authentication process of the UE is not affected, the UE may still be authenticated, and the UE may be induced to access a network that is not expected to access, so that a security risk is caused.

For example, the WLAN AN broadcasts an ID of a PLMN 2. Actually, the network to which the WLAN AN belongs is a PLMN 1. In this case, the UE considers that the UE accesses the PLMN 2 through the WLAN AN. Actually, the UE is spoofed to access the PLMN 1 through the WLAN AN, so that a security risk is caused.

(2) Currently, a UDM directly selects an EAP-AKA' authentication method based on an NSWO indication. However, as the standard evolves, an EAP authentication method that can be selected should be more flexible, and is not limited to the EAP-AKA' authentication method, and may further include an extensible authentication protocol transport layer security (EAP transport layer security, EAP-TLS) authentication method, an extensible authentication protocol tunneled transport layer security (EAP tunneled transport layer security, EAP-TTLS) authentication method, and the like. How to select another authentication method and how the UDM understands the NSWO indication are problems that deserve attention. This problem may also be referred to as a backward compatibility problem of selecting an EAP authentication method.

In view of the foregoing problems, this application provides an authentication method, to optimize an existing UE authentication process.

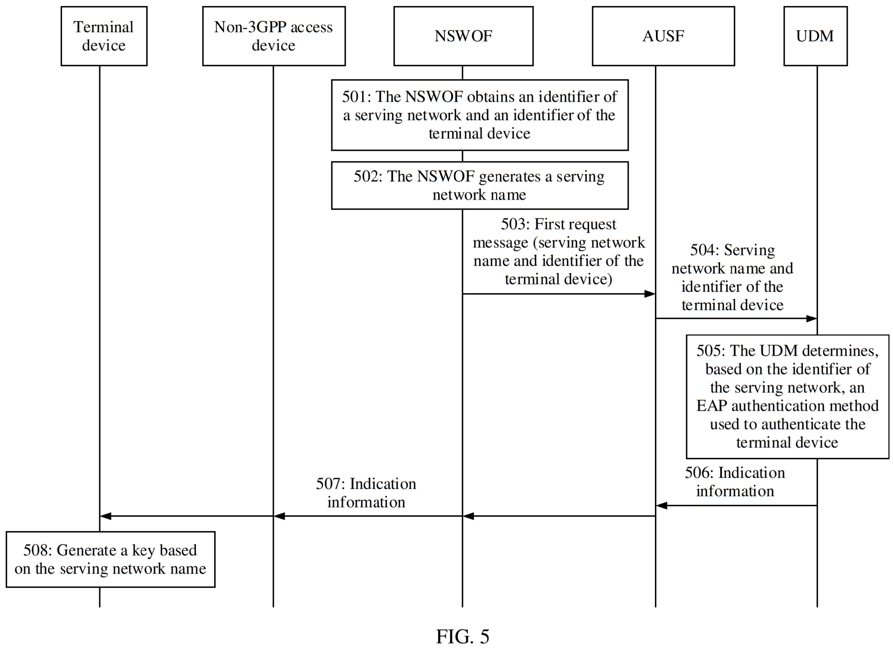

As shown in FIG. 5, the method includes the following steps.

501: An NSWOF obtains an identifier of a serving network and an identifier of a terminal device, where the serving network is a network accessed by the terminal device in a non-3GPP access mode, and the serving network provides a service of an NSWO.

The terminal device accesses the network in the non-3GPP access mode. For example, the terminal device establishes a connection to a non-3GPP access device. Further, the non-3GPP access device may obtain the identifier of the terminal device from the terminal device. Before 501, for details about interaction between the terminal device and the non-3GPP access device, refer to related content in S401 to S403.

For example, the identifier of the terminal device may be an SUCI of the terminal device.

The NSWOF may obtain the identifier of the serving network by using, but is not limited to, the following two manners:
Manner 1: The NSWOF receives the identifier of the serving network and the identifier of the terminal device from the non-3GPP access device.

For example, the non-3GPP access device sends a Swa protocol message to the NSWOF through a Swa interface. The Swa protocol message includes an identifier (that is, the identifier of the serving network) of a network to which the non-3GPP access device belongs and the identifier of the terminal device. For a specific manner in which the non-3GPP access device obtains the identifier of the terminal device, refer to S401 to S403.

If the non-3GPP access device is deployed in a public network, the identifier of the network to which the non-3GPP access device belongs is an identifier of the public network. In other words, the identifier of the serving network is the identifier of the public network. For example, the non-3GPP access device is deployed in a PLMN, and the identifier of the serving network is a PLMN ID. If the non-3GPP access device is deployed in a non-public network, the identifier of the network to which the non-3GPP access device belongs is an identifier of the non-public network. In other words, the identifier of the serving network is the identifier of the non-public network. For example, the non-3GPP access device is deployed in an SNPN, and the identifier of the serving network is a PLMN ID+NID.

In addition, the NSWOF may further check correctness of the identifier of the serving network. For example, the NSWOF may determine, based on interface configuration information, a true identifier of a network to which the non-3GPP access device belongs, that is, a true identifier of the serving network, and then determine, based on the true identifier of the serving network and the received identifier of the serving network, whether the identifier that is of the serving network and that is sent by the non-3GPP access device is true, to check correctness of the received identifier of the serving network. If it is determined that the received identifier of the serving network is true, 502 continues to be performed. If it is determined that the received identifier of the serving network is false, the NSWOF may continue to perform 502 by using the true identifier of the serving network, or the NSWOF may directly reject an authentication request, to prevent the terminal device from accessing a malicious network.

Manner 2: The NSWOF may determine the identifier of the serving network based on the identifier of the terminal device. For a method for obtaining the identifier of the terminal device by the NSWOF, refer to the foregoing Manner 1.

In a possible implementation, the NSWOF uses an identifier included in another domain part of the identifier of the terminal device as the identifier of the serving network, and the identifier of the terminal device is in a decorated network access identifier format.

For example, if the NSWOF identifies that the identifier of the terminal device includes another domain part, the identifier included in the another domain part (the otherrealm part) may be directly used as the identifier of the serving network.

With reference to S403, FIG. 2, and FIG. 3, it can be learned that the otherrealm indicates the serving network of the terminal device. If the serving network of the terminal device is a public network, the identifier of the serving network is an identifier of the public network. For example, the serving network of the terminal device is a PLMN, and the otherrealm may be represented by using a PLMN ID. In other words, the identifier of the serving network is the PLMN ID. If the serving network of the terminal device is a non-public network, the identifier of the serving network is an identifier of the non-public network. For example, the serving network of the terminal device is an SNPN, and the otherrealm may be represented by using a PLMN ID+NID. In other words, the identifier of the serving network is the PLMN ID+NID.

In another possible implementation, when the identifier of the terminal device is in a network access identifier format that does not include another domain, the identifier of the terminal device is in a general format, and the NSWOF may use an identifier included in a home field part (that is, a homerealm part) of the identifier of the terminal device as the identifier of the serving network, or the NSWOF uses, as the identifier of the serving network, the identifier of the network to which the NSWOF belongs. For example, the NSWOF may determine the identifier of the network to which the NSWOF belongs based on file configuration information (profile) of the NSWOF. If the NSWOF is deployed in a public network, the identifier of the network to which the NSWOF belongs is an identifier of the public network. In other words, the identifier of the serving network is the identifier of the public network. For example, the NSWOF is deployed in a PLMN, and the identifier of the serving network is a PLMN ID. If the NSWOF is deployed in a non-public network, the identifier of the network to which the NSWOF belongs is an identifier of the non-public network. In other words, the identifier of the serving network is the identifier of the non-public network. For example, the NSWOF is deployed in an SNPN, and the identifier of the serving network is a PLMN ID+NID.

For example, the NSWOF may first determine whether the identifier of the terminal device is in a decorated network access identifier format, and if the identifier of the terminal device is in the decorated network access identifier format, the NSWOF uses the identifier included in the another domain part of the identifier of the terminal device as the identifier of the serving network. Otherwise, the NSWOF uses the identifier included in the home domain part of the identifier of the terminal device as the identifier of the serving network, or uses, as the identifier of the serving network, the identifier of the network to which the NSWOF belongs.

In addition, the NSWOF may further check correctness of the identifier of the serving network. For example, the NSWOF may determine, based on interface configuration information, a true identifier of a network to which the non-3GPP access device belongs, that is, a true identifier of the serving network, and then determine, based on the true identifier of the serving network and the identifier that is of the serving network and that is determined in Manner 2, whether the identifier that is of the serving network and that is determined in Manner 2 is true, to check correctness of the identifier that is of the serving network and that is determined in Manner 2.

If it is determined that the identifier included in the another domain part in the identifier of the terminal device is true, 502 continues to be performed.

If it is determined that the identifier included in the another domain part in the identifier of the terminal device is false, the NSWOF may update the identifier of the terminal device, to ensure accuracy of the identifier of the terminal device, and continue to perform 502. Alternatively, the NSWOF may directly reject an authentication request, to prevent the terminal device from accessing a malicious network.

Manner 3: The NSWOF may determine, based on interface configuration information, a true identifier of a network to which the non-3GPP access device belongs, that is, a true identifier of the serving network.

502: The NSWOF generates a serving network name, where the serving network name includes information about the NSWO and the identifier of the serving network.

The information about the NSWO indicates that the serving network provides a service of the NSWO. In addition, the information about the NSWO may be alternatively replaced with other information. The other information indicates the terminal device to connect to the non-3GPP access network by using a 3GPP system credential, to access the network without registering with the 3GPP system.

For example, the information about the NSWO may be represented by a fixed character string "5G:NSWO". In addition, in a future communication network, the information about the NSWO may be alternatively represented in another form. This is not limited in this application. For example, in a 6G network, the information about the NSWO may be represented by a fixed character string "6G:NSWO".

For example, the serving network name is "5G:NSWO"+"SN ID". The SD ID is the true identifier of the serving network determined in the foregoing 501.

It should be further understood that, in this application, unless otherwise specified, the serving network name includes the identifier of the serving network and the information about the NSWO, and the serving network name may also be referred to as a new serving network name. However, in the conventional technology, the serving network name does not include the identifier of the serving network, but includes only a fixed character string, and may also be referred to as a previous serving network name.

For example, the NSWOF may generate the serving network name when determining that a local policy is met. Specifically, the following scenarios may be included but not limited to:
Scenario 1: The NSWOF generates the serving network name based on configuration information, where the configuration information indicates that the NSWOF is deployed in a non-public network.

It should be understood that a meaning of the configuration information may be further described as follows: The configuration information indicates a key derivation manner in which the identifier of the serving network is used as an input parameter, or a key derivation manner based on the identifier of the serving network, or the configuration information indicates that an NSWOF is deployed in an SNPN, or the configuration information indicates that an NSWOF is in a private network scenario.

In a possible implementation, the configuration information may be configured by an administrator for the NSWOF. For example, a specific implementation of the configuration information may be in a switch form. The configuration information may include one bit. When a value of the one bit is 0, it indicates that the NSWOF is deployed in a public network; or when a value of the one bit is 1, it indicates that the NSWOF is deployed in a non-public network.

In another possible implementation, the configuration information may be file configuration information of the NSWOF. The file configuration information may include an identifier of the NSWOF, an identifier of a network to which the NSWOF belongs, and the like. When the identifier of the network to which the NSWOF belongs is an identifier of a non-public network, the NSWOF generates the serving network name. When the identifier of the network to which the NSWOF belongs is an identifier of a public network, the NSWOF may generate a serving network name that does not include an identifier of a serving network.

Scenario 2: The NSWOF generates the serving network name when the identifier of the terminal device is in a decorated network access identifier format. It may also be described as follows: When the terminal device is in a roaming scenario, or the AUSF and the UDM are CHs, the NSWOF generates the serving network name. In addition, an administrator may further configure related information 1 for the NSWOF. For example, a specific implementation of the related information 1 may be in a switch form. The related information 1 may include one bit. When a value of the one bit is 0, it indicates that the terminal device is not in a roaming scenario, and the AUSF and the UDM are not a CH; or when a value of the one bit is 1, it indicates that the terminal device is in a roaming scenario, or the AUSF and the UDM are CHs.

In a possible implementation, when the identifier of the terminal device is in a decorated network access identifier format, and another domain part of the identifier of the terminal device includes a public network identifier, the NSWOF generates the serving network name. It may also be described as follows: If the terminal device is in a roaming scenario, the NSWOF generates the serving network name. In addition, an administrator may further configure related information 2 for the NSWOF. For example, a specific implementation of the related information 2 may be in a switch form. The related information 1 may include one bit. When a value of the one bit is 0, it indicates that the terminal device is not in a roaming scenario; or when a value of the one bit is 1, it indicates that the terminal device is in a roaming scenario.

In another possible implementation, the NSWOF generates the serving network name when the identifier of the terminal device is in a decorated network access identifier format, and another domain part of the identifier of the terminal device includes a non-public network identifier. It may also be described as follows: If the AUSF and the UDM are CHs, the NSWOF generates the serving network name. In addition, an administrator may further configure related information 3 for the NSWOF. For example, a specific implementation of the related information 3 may be in a switch form. The related information 3 may include one bit. When a value of the one bit is 0, it indicates that the AUSF and the UDM are not a CH; or when a value of the one bit is 1, it indicates that the AUSF and the UDM are CHs.

Scenario 3: The NSWOF generates the serving network name when the identifier of the terminal device is an anonymous SUCI. It may also be described as follows: When an optional EAP authentication method is not limited to an EAP-AKA' authentication method, the NSWOF generates the serving network name.

Through determining in the foregoing different scenarios, the NSWOF may determine, for different scenarios, whether the serving network name including the identifier of the serving network needs to be generated, that is, a new serving network name, so that whether a new serving network name needs to be generated can be flexibly configured for different scenarios, and this is also compatible to an existing NSWO authentication procedure.

503: The NSWOF sends a first request message to the AUSF, where the first request message is used to request to authenticate the terminal device, and the first request message includes the serving network name and the identifier of the terminal device.

For example, the first request message may be the UE authentication request message in S405. It should be understood that, a difference between the first request message and the UE authentication request message in S405 is that the serving network name carried in the first request message includes the identifier of the serving network. It should be understood that the serving network name mentioned in this embodiment of this application is different from the serving network name in the embodiment shown in FIG. 4, and details are not described subsequently.

504: After the AUSF receives the first request message from the NSWOF, the AUSF sends the serving network name and the identifier of the terminal device to the UDM.

For example, the AUSF may send the UE authentication obtaining request message in S406 to the UDM, where the UE authentication obtaining request message includes the serving network name and the identifier of the terminal device.

505: After the UDM receives the serving network name and the identifier of the terminal device from the AUSF, the UDM determines, based on the identifier of the serving network, an EAP authentication method used to authenticate the terminal device.

For example, when the identifier of the serving network is a public network identifier, the UDM determines that the EAP authentication method is an EAP-AKA' authentication method.

Alternatively, when the identifier of the serving network is a non-public network identifier, the UDM determines the EAP authentication method based on subscription information of the terminal device, where the EAP authentication method is one of the following: an EAP-AKA' authentication method, an EAP-TLS authentication method, or an EAP-TTLS authentication method. For example, the subscription information of the terminal device includes at least one EAP authentication method and a corresponding selection priority. Further, the UDM may determine, based on the subscription information of the terminal device, to select an EAP authentication method with a highest priority as the EAP authentication method used to authenticate the terminal device.

It should be noted that the AUSF further receives an NSWO indication from the NSWOF, and the UDM further receives the NSWO indication from the AUSF. When the UDM determines that the serving network name includes the identifier of the serving network, the UDM ignores the NSWO indication.

For example, the NSWO indication may be included in the first request message, and the AUSF may send the identifier of the terminal device, the serving network name, and the NSWO indication together to the UDM. For details, refer to related descriptions in S405 and S406.

That the UDM ignores the NSWO indication may be understood as that the UDM no longer selects the EAP-AKA' authentication method based on the NSWO indication. Specifically, the UDM receives both the NSWO indication and the serving network name. Because the currently received serving network name is different from the previous serving network name, and the currently received serving network name includes the identifier of the serving network, the UDM ignores the NSWO indication, and selects the EAP authentication method based on the identifier of the serving network instead of selecting the EAP-AKA' authentication method based on the NSWO indication.

According to the foregoing design, the UDM can select an appropriate EAP authentication method from a plurality of EAP authentication methods, to eliminate a limitation in the conventional technology that only an EAP-AKA' algorithm can be selected after an NSWO indication is received, and resolve a backward compatibility problem of selecting an EAP authentication method.

506: The UDM sends indication information to the AUSF, where the indication information indicates the EAP authentication method used to authenticate the terminal device.

For example, the UDM sends the UE authentication obtaining response message in S407 to the AUSF. The message may indicate the EAP authentication method used to authenticate the terminal device.

Further, when the EAP authentication method used to authenticate the terminal device is the EAP-TLS authentication method or the EAP-TTLS authentication method, 507A continues to be performed. When the EAP authentication method used to authenticate the terminal device is the EAP-AKA' authentication method, the UDM derives a CK and an IK based on a key K, and the UDM derives a CK' and an IK' based on the CK, the IK, and the serving network name. The UDM further sends the SUPI, the CK', and the IK' to the AUSF, and continues to perform 507B.

507: The AUSF sends the indication information to the terminal device by using the NSWOF and the non-3GPP access device.

It should be understood that specific content indicated by the indication information in 507 is the same as that indicated by the indication information in 506, but names of specific information may be different, and a message carrying the indication information in 506 is also different from a message carrying the indication information in 507. This is not limited in this application.

For example, an EAP type field in the EAP message sent by the AUSF to the terminal device carries the indication information.

When the EAP authentication method used to authenticate the terminal device is the EAP-TLS authentication method or the EAP-TTLS authentication method, the AUSF may further send the serving network name to the terminal device or not send the serving network name to the terminal device through a bidirectional authentication process. This is not limited in this application.

When the EAP authentication method used to authenticate the terminal device is the EAP-AKA' authentication method, in a bidirectional authentication process, the AUSF carries the serving network name in an AT-KDF-INPUT field and sends the AT-KDF-INPUT field to the terminal device.

In addition, after the AUSF receives the indication information from the UDM, the following describes a specific operation of the AUSF with reference to different EAP authentication methods. The following specific operation of the AUSF may be performed before or after 507. This is not limited in this application.

Scenario 1: The EAP authentication method used to authenticate the terminal device is the EAP-TLS authentication method or the EAP-TTLS authentication method.

The AUSF generates a first key based on the serving network name. The AUSF uses the serving network name as an input parameter, and the terminal device also uses the serving network name as an input parameter. If first keys generated by the AUSF and the terminal device are different, it may be determined that the terminal device is induced to access the non-3GPP access device in the network to which the terminal device belongs. In this way, the network accessed by the terminal device in the non-3GPP access mode can be verified, and access security of the terminal device is improved.

In a possible design, the first key is a master session key MSK. The AUSF generates the MSK based on a certificate associated with the EAP authentication method and the serving network name.

For example, the AUSF may further receive the SUPI of the terminal device from the UDM. The AUSF may generate the MSK based on the certificate associated with the EAP authentication method, the serving network name, and the SUPI. In the foregoing design, the SUPI is used as a parameter for generating the MSK, so that correctness of the SUPI can be further ensured in a key derivation manner.

In another possible design, the AUSF generates the MSK based on the certificate associated with the EAP authentication method. The AUSF generates the first key based on the MSK and the serving network name. In this case, the first key may be denoted as a KNSWOF, or may be denoted as another form. This is not limited in this application.

For example, the AUSF may further receive the SUPI of the terminal device from the UDM, and the AUSF may generate the first key based on the MSK, the SUPI, and the serving network name. In the foregoing design, the SUPI is used as a parameter for generating the MSK, so that correctness of the SUPI can be further ensured in a key derivation manner.

When the AUSF and the terminal device perform bidirectional authentication based on the EAP-TLS authentication method, for a specific procedure, refer to RFC 5216. When the AUSF and the terminal device perform bidirectional authentication based on the EAP-TTLS authentication method, for a specific procedure, refer to RFC 5281.

Scenario B: The EAP authentication method used to authenticate the terminal device is the EAP-AKA' authentication method.

The AUSF generates an MSK based on the SUPI, the CK', and the IK'.

For example, the first request message further includes an NSWO indication, and the AUSF generates the MSK based on the SUPI, the CK', and the IK' based on the NSWO indication.

Refer to S408. The AUSF and the terminal device perform bidirectional authentication based on the EAP-AKA' authentication method. For a specific procedure, refer to RFC 5448.

508: After the terminal device receives the indication information from the AUSF, the terminal device generates the key based on the serving network name.

In addition, after the AUSF receives the indication information from the UDM, the following describes a specific operation of the terminal device with reference to different EAP authentication methods.

Scenario 1: The EAP authentication method is the EAP-TLS authentication method or the EAP-TTLS authentication method

The terminal device generates a first key based on the serving network name. The terminal device uses the serving network name as an input parameter, and the AUSF also uses the serving network name as an input parameter. If first keys generated by the AUSF and the terminal device are different, it may be determined that the terminal device is induced to access the non-3GPP access device in the network to which the terminal device belongs. In this way, the network accessed by the terminal device in the non-3GPP access mode can be verified, and access security of the terminal device is improved.

It should be noted that the terminal device and the AUSF generate the key by using a same method. For details, refer to related descriptions of 507A.

In a possible implementation, the terminal device generates the serving network name.

For example, the terminal device receives, from the non-3GPP access device, the identifier of the network to which the non-3GPP access device belongs, uses, as the identifier of the serving network, the identifier of the network to which the non-3GPP access device belongs, and the terminal device generates the serving network name based on the identifier of the serving network.

It should be further understood that, if a non-3GPP access device that establishes a non-3GPP connection to the terminal device does not broadcast an identifier of a network to which the non-3GPP access device belongs, but broadcasts an identifier of another network, that is, the identifier that is of the network to which the non-3GPP access device belongs and that is obtained by the terminal device is false, and a service identifier determined by the terminal device is false, the serving network name generated by the terminal device is different from the serving network name used by the AUSF to generate the first key. The identifier that is of the serving network and that is included in the serving network name received by the AUSF is true. Further, the AUSF and the terminal device use the serving network name as a parameter for key derivation. Because the identifier that is of the serving network and that is included in the serving network name generated by the terminal device is different from the identifier that is of the serving network and that is included in the serving network name received by the AUSF, the first key generated by the AUSF is different from the first key generated by the terminal device. As a result, the non-3GPP access device fails to establish a secure connection to the terminal device. It can be learned that, according to the foregoing design, the serving network name includes the identifier of the serving network, and the serving network name is used as a parameter for key derivation, so that the network accessed by the terminal device in the non-3GPP access mode can be verified, the terminal device is not induced to access a non-3GPP access device in a network to which the terminal device belongs, and access security of the terminal device is improved.

In another possible implementation, the terminal device receives the serving network name from the AUSF.

In this case, the terminal device may further receive, from the non-3GPP access device, the identifier of the network to which the non-3GPP access device belongs. With reference to the foregoing description, if the non-3GPP access device that establishes the non-3GPP connection to the terminal device does not broadcast the identifier of the network to which the non-3GPP access device belongs, but broadcasts an identifier of another network, that is, the identifier that is of the network to which the non-3GPP access device belongs and that is obtained by the terminal device is false, and a service identifier determined by the terminal device is false, the serving network name sent by the AUSF to the terminal device includes a true identifier of the serving network. Further, the terminal device may determine whether the identifier of the network to which the non-3GPP access device belongs is consistent with the true identifier of the serving network. If the identifiers are consistent, it indicates that the non-3GPP access device does not disguise the network to which the non-3GPP access device belongs. Otherwise, it indicates that the non-3GPP access device disguises the network to which the non-3GPP access device belongs. It can be learned that, according to the foregoing design, the serving network name includes the identifier of the serving network, so that the network accessed by the terminal device in the non-3GPP access mode can be verified, the terminal device is not induced to access a non-3GPP access device in a network to which the terminal device belongs, and access security of the terminal device is improved.

It should be further understood that the EAP-TLS authentication method or the EAP-TTLS authentication method may be further applied to a non-NSWO scenario. Therefore, when the EAP authentication method used to authenticate the terminal device is the EAP-TLS authentication method or the EAP-TTLS authentication method, the terminal device further needs to determine to use a service of the NSWO, and then the terminal device generates the first key based on the serving network name. Otherwise, the terminal device may not generate the first key based on the serving network name.

Scenario 2: The EAP authentication method used to authenticate the terminal device is the EAP-AKA' authentication method

The terminal device may determine whether the identifier of the network to which the non-3GPP access device belongs is consistent with the identifier that is of the serving network and that is in the serving network name. If the identifier of the network to which the non-3GPP access device belongs is consistent with the identifier that is of the serving network and that is in the serving network name, the terminal device may generate the MSK. For example, the terminal device derives the CK and the IK based on the key K, derives the CK' and the IK' based on the CK, the IK, and the serving network name, and generates the MSK based on the SUPI of the terminal device, the CK', and the IK'. For a specific process of generating the MSK, refer to the related descriptions in S412, and details are not described herein again. If the identifier of the network to which the non-3GPP access device belongs is inconsistent with the identifier that is of the serving network and that is in the serving network name, the terminal device may determine not to access the non-3GPP access device.

It can be learned from the foregoing content that when the EAP authentication method used to authenticate the terminal device is the EAP-AKA' authentication method, the terminal device may obtain the serving network name from the AUSF, where the serving network name includes a true identifier of the serving network. Further, the terminal device may determine whether the identifier of the network to which the non-3GPP access device belongs is consistent with the true identifier of the serving network. If the identifiers are consistent, it indicates that the non-3GPP access device does not disguise the network to which the non-3GPP access device belongs. Otherwise, it indicates that the non-3GPP access device disguises the network to which the non-3GPP access device belongs. It can be learned that, according to the foregoing design, the serving network name includes the identifier of the serving network, so that the network accessed by the terminal device in the non-3GPP access mode can be verified, the terminal device is not induced to access a non-3GPP access device in a network to which the terminal device belongs, and access security of the terminal device is improved.

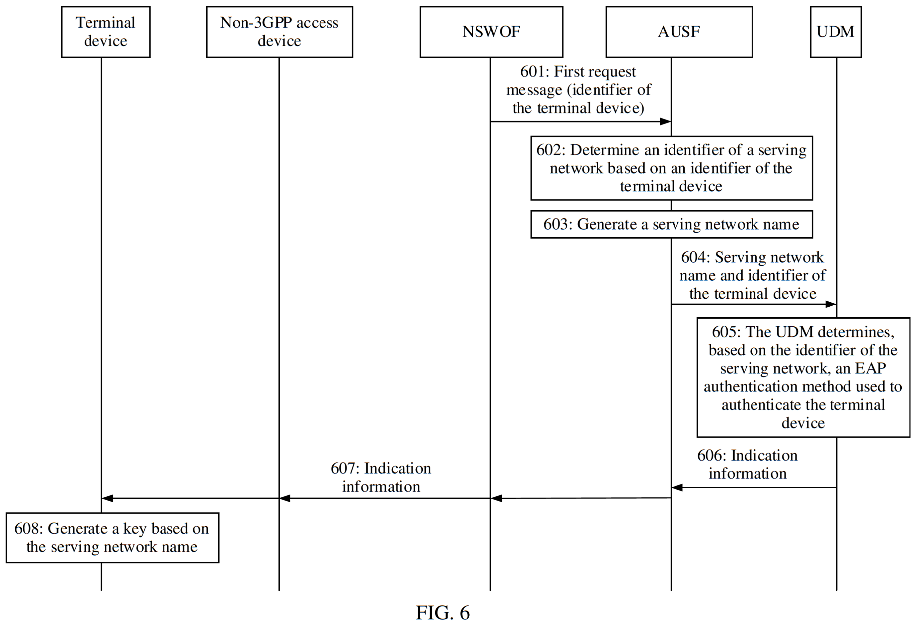

In the embodiment shown in FIG. 5, the NSWOF generates the serving network name. In addition, the AUSF may further generate the serving network name. For details, refer to the following embodiment shown in FIG. 6. In view of the foregoing problems, this application further provides an authentication method, to optimize an existing UE authentication process. As shown in FIG. 6, the method includes the following steps.

601: An NSWOF sends a first request message to an AUSF, where the first request message is used to request to authenticate a terminal device, and the first request message includes an identifier of the terminal device.

The terminal device accesses a network in a non-3GPP access mode. For example, the terminal device establishes a connection to a non-3GPP access device. Before 601, for details about interaction between the terminal device, the non-3GPP access device, and the NSWOF, refer to related content in S401 to S404.

In a possible design, the first request message may include a true identifier of a serving network. For details about how the NSWOF obtains the identifier of the serving network and how to determine whether the obtained identifier of the serving network is true, refer to related descriptions in 501. In this case, 602 is omitted, and 603 is directly performed.

In another possible design, the NSWOF obtains the identifier of the serving network in Manner 1 or Manner 2 in 501, determines, through an interface of the non-3GPP access device, a true identifier of the network to which the non-3GPP access network belongs, and determines whether the obtained identifier of the serving network is true. If the obtained identifier of the serving network is true, the NSWOF sends the first request message to the AUSF; otherwise, the NSWOF does not send the first request message to the AUSF, but sends a rejection message to the non-3GPP access device, and an authentication process for the terminal device ends.

602: The AUSF determines the identifier of the serving network based on the identifier of the terminal device, where the serving network is a network accessed by the terminal device in a non-3GPP access mode, and the serving network provides a service of an NSWO.

With reference to 601, it can be learned that the NSWOF has determined authenticity of the identifier of the serving network. Therefore, the AUSF no longer determines the authenticity of the identifier of the serving network.

For example, the AUSF may determine the identifier of the serving network based on the identifier of the terminal device. For details, refer to Manner 2 in 501. Details are not described herein again.

603: The AUSF generates a serving network name, where the serving network name includes information about the NSWO and the identifier of the serving network.

For details, refer to 502. Operations performed by the AUSF are the same as those performed by the NSWOF. Details are not described herein again.

604: The AUSF sends the serving network name and the identifier of the terminal device to the UDM.

For example, the AUSF may send the UE authentication obtaining request message in S406 to the UDM, where the UE authentication obtaining request message includes the serving network name and the identifier of the terminal device.

For 605 to 608, refer to corresponding content in 505 to 508. Details are not described herein again.

According to the foregoing design, the serving network name includes the identifier of the serving network, so that the network accessed by the terminal device in the non-3GPP access mode can be verified, the terminal device is not induced to access a non-3GPP access device in a network to which the terminal device belongs, and access security of the terminal device is improved.

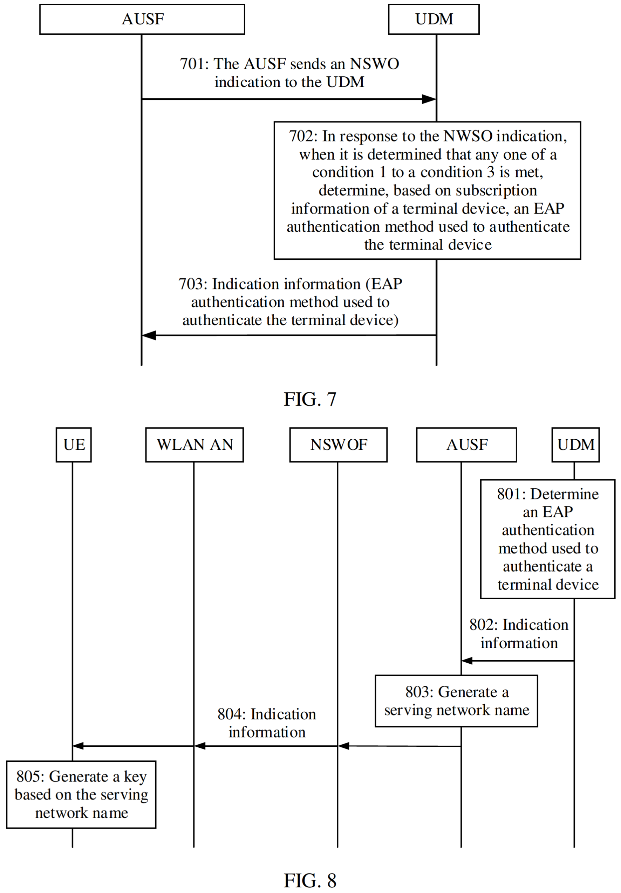

To resolve a backward compatibility problem of selecting an EAP authentication method, this application further provides an authentication method. As shown in FIG. 7, the method includes the following steps.

701: An AUSF sends an NSWO indication to a UDM.

For example, the AUSF may send the UE authentication obtaining request message in S406 to the UDM, where the UE authentication obtaining request message includes the NSWO indication.

A terminal device accesses a network in a non-3GPP access mode. For example, the terminal device establishes a connection to a non-3GPP access device. Before 701, for details about interaction between the terminal device, the non-3GPP access device, an NSWOF, and the AUSF, refer to related content in S401 to S405. Alternatively, refer to related content in 501 to 503 in the embodiment shown in FIG. 5, or related content in 601 to 603 in the embodiment shown in FIG. 6.

702: In response to the NWSO indication, when the UDM determines that any one of a condition 1 to a condition 3 is met, the UDM determines, based on subscription information of the terminal device, an EAP authentication method used to authenticate the terminal device.

Condition 1: An identifier of a network to which the UDM belongs is a non-public network identifier. The condition 1 may also be described as follows: The UDM determines that the UDM is deployed in a non-public network, a private network, or an SNPN. The identifier of the network to which the UDM belongs may be determined based on file configuration information of the UDM.

Condition 2: The AUSF further sends an identifier of the terminal device to the UDM, where the identifier of the terminal device is in a decorated network access identifier format, and another domain part of the identifier of the terminal device includes a non-public network identifier. The condition 2 may also be described as follows: The UDM determines that the AUSF and the UDM are CHs.

Condition 3: The AUSF further sends an identifier of the terminal device to the UDM, where the identifier of the terminal device is an anonymous SUCI of the terminal device.

The EAP authentication method used to authenticate the terminal device is one of the following: an EAP-AKA' authentication method, an EAP-TLS authentication method, or an EAP-TTLS authentication method.

In addition, 702 may be further described as follows: When the UDM determines that any one of the condition 1 to the condition 3 is met, the UDM ignores the NSWO indication, and the UDM determines, based on the subscription information of the terminal device, an EAP authentication method used to authenticate the terminal device. That the UDM ignores the NSWO indication means that the UDM no longer directly selects the EAP-AKA' authentication method.

703: The UDM sends indication information to the AUSF, where the indication information indicates the EAP authentication method used to authenticate the terminal device.

For example, the UDM sends the UE authentication obtaining response message in S407 to the AUSF. The message may indicate the EAP authentication method used to authenticate the terminal device.

It should be noted that, in the embodiment shown in FIG. 7, whether the serving network name includes the identifier of the serving network is not limited.

The embodiment shown in FIG. 7 may be further combined with the embodiment shown in FIG. 5 or FIG. 6. If the AUSF further sends the serving network name to the UDM, and the serving network name includes the identifier of the serving network, when the EAP authentication method determined by the UDM is the EAP-AKA' authentication method, the UDM may derive a CK and an IK based on a key K, and further derive a CK' and an IK' based on the CK, the IK, and the serving network name. The UDM sends the SUPI, the CK', and the IK' to the AUSF.

If the AUSF further sends, to the UDM, the serving network name that does not include the identifier of the serving network, the UDM may further generate the serving network name that includes the identifier of the serving network. The UDM may determine the identifier of the serving network in a manner similar to Manner 2 in 501. When the EAP authentication method determined by the UDM is the EAP-AKA' authentication method, the UDM may derive the CK and the IK based on the key K, and further derive the CK' and the IK' based on the CK, the IK, and the serving network name. The UDM sends the SUPI, the CK', and the IK' to the AUSF.

According to the foregoing design, the UDM can select an appropriate EAP authentication method from a plurality of EAP authentication methods, to eliminate a limitation in the conventional technology that only an EAP-AKA' algorithm can be selected after an NSWO indication is received, and resolve a backward compatibility problem of selecting an EAP authentication method.

This application further provides an authentication method. As shown in FIG. 8, the method includes the following steps.

801: A UDM determines an EAP authentication method used to authenticate a terminal device. The EAP authentication method used to authenticate the terminal device is one of the following: an EAP-AKA' authentication method, an EAP-TLS authentication method, or an EAP-TTLS authentication method.

For example, the UDM may determine, by using the method shown in FIG. 7, the EAP authentication method used to authenticate the terminal device. Alternatively, the UDM may determine, in another manner, the EAP authentication method used to authenticate the terminal device. This is not limited herein.

A terminal device accesses a network in a non-3GPP access mode. For example, the terminal device establishes a connection to a non-3GPP access device. Before 801, for details about interaction between the terminal device, the non-3GPP access device, an NSWOF, and the AUSF, refer to related content in S401 to S406.

802: The UDM sends indication information to the AUSF, where the indication information indicates the EAP authentication method used to authenticate the terminal device. In addition, when the EAP authentication method used to authenticate the terminal device is the EAP-AKA' authentication method, the UDM generates a serving network name, derives a CK and an IK based on a key K, and derives a CK' and an IK' based on the CK, the IK, and the serving network name. The UDM further sends an SUPI of the terminal device, the CK', and the IK' to the AUSF. The serving network name includes information about an NSWO and an identifier of the serving network. The serving network is a network accessed by the terminal device in a non-3GPP access mode, and the serving network provides a service of the NSWO.

For example, the UDM may determine the identifier of the serving network based on the identifier of the terminal device. For details, refer to Manner 2 in 501. Details are not described herein again. For example, the UDM may determine the identifier of the serving network based on an SUCI of the terminal device; or the UDM may determine the identifier of the serving network based on the SUPI of the terminal device.

803: After the AUSF receives the indication information, the AUSF generates the serving network name.

For example, the AUSF may determine the identifier of the serving network based on the identifier of the terminal device. For details, refer to Manner 2 in 501. Details are not described herein again. For example, the AUSF may determine the identifier of the serving network based on the SUCI of the terminal device. Alternatively, when the UDM sends the SUPI of the terminal device to the AUSF, the AUSF may determine the identifier of the serving network based on the SUPI of the terminal device.

804: The AUSF sends the indication information to the terminal device by using the NSWOF and the non-3GPP access device.

In addition, the AUSF further performs a related operation in the scenario 1 or the scenario 2 in 506.

805: After the terminal device receives the indication information from the AUSF, the terminal device generates the key based on the serving network name.

In addition, the terminal device further performs a related operation in the scenario 1 or the scenario 2 in 507.

According to the foregoing design, the serving network name includes the identifier of the serving network, so that the network accessed by the terminal device in the non-3GPP access mode can be verified, the terminal device is not induced to access a non-3GPP access device in a network to which the terminal device belongs, and access security of the terminal device is improved.

It may be understood that, to implement the functions in the foregoing embodiments, the terminal device or each functional module (NSWOF, UDM, and AUSF) includes a corresponding hardware structure and/or software module for performing each function. A person skilled in the art should be easily aware that, in this application, the units and method steps in the examples described with reference to embodiments disclosed in this application can be implemented by hardware or a combination of hardware and computer software. Whether a function is performed by using hardware or hardware driven by computer software depends on a particular application scenario and design constraint of the technical solutions.

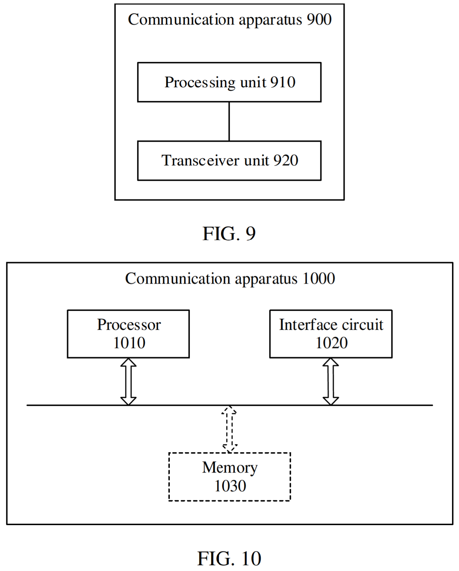

FIG. 9 and FIG. 10 each are a diagram of a structure of a possible communication apparatus according to an embodiment of this application. These communication apparatuses may be configured to implement functions of the terminal device or each functional module (NSWOF, UDM, and AUSF) in the foregoing method embodiments. Therefore, beneficial effects of the foregoing method embodiments can also be implemented. In embodiments of this application, the communication apparatus may be a terminal device, an NSWOF, an AUSF, or a UDM, or may be a module (for example, a chip) applied to a terminal device or each functional module (an NSWOF, a UDM, or an AUSF).

As shown in FIG. 9, a communication apparatus 900 includes a processing unit 910 and a transceiver unit 920.

When the communication apparatus 900 is configured to implement the functions of the NSWOF in the method embodiment shown in FIG. 5, the transceiver unit 920 is configured to obtain an identifier of a serving network and an identifier of a terminal device, where the serving network is a network accessed by the terminal device in a non-3GPP access mode, and the serving network provides a service of an NSWO. The processing unit 910 is configured to generate a serving network name, where the serving network name includes information about the NSWO and the identifier of the serving network. The transceiver unit 920 is configured to send a first request message to an authentication service functional entity, where the first request message is used to request to authenticate the terminal device, and the first request message includes the serving network name and the identifier of the terminal device.

In a possible design, the processing unit 910 is configured to generate the serving network name based on configuration information, where the configuration information indicates that a non-seamless wireless local area network offload functional entity is deployed in a non-public network.

In a possible design, the processing unit 910 is configured to generate the serving network name when the identifier of the terminal device is an anonymous subscription concealed identifier.

In a possible design, the processing unit 910 is configured to generate the serving network name when the identifier of the terminal device is in a decorated network access identifier format.

In a possible design, the processing unit 910 is configured to: generate the serving network name when the identifier of the terminal device is in the decorated network access identifier format and another domain part of the identifier of the terminal device includes a public network identifier; or generate the serving network name when the identifier of the terminal device is in the decorated network access identifier format and another domain part of the identifier of the terminal device includes a non-public network identifier.

In a possible design, the transceiver unit 920 is configured to receive the identifier of the serving network from a non-3GPP access device.

In a possible design, the processing unit 910 is configured to determine the identifier of the serving network based on the identifier of the terminal device.

In a possible design, the processing unit 910 is configured to use an identifier included in the another domain part of the identifier of the terminal device as the identifier of the serving network, where the identifier of the terminal device is in the decorated network access identifier format.

In a possible design, the processing unit 910 is configured to use, as the identifier of the serving network, an identifier of a network to which the terminal device belongs when the identifier of the terminal device is in a network access identifier format that does not include another domain.

When the communication apparatus 900 is configured to implement functions of the UDM in the method embodiment shown in FIG. 5 or FIG. 6:
the transceiver unit 920 is configured to receive a serving network name and an identifier of a terminal device from an authentication service functional entity, where the serving network name includes information about an NSWO and an identifier of a serving network, the serving network is a network accessed by the terminal device in a non-3GPP access mode, and the serving network provides a service of the NSWO. The processing unit 910 is configured to determine, based on the identifier of the serving network, an extensible authentication protocol EAP authentication method used to authenticate the terminal device. The processing unit 910 is configured to send indication information to the authentication service functional entity, where the indication information indicates the EAP authentication method.

In a possible design, the processing unit 910 is configured to: when the identifier of the serving network is a public network identifier, determine that the EAP authentication method is an EAP-AKA' authentication method; or when the identifier of the serving network is a non-public network identifier, determine the EAP authentication method based on subscription information of the terminal device, where the EAP authentication method is one of the following: an EAP-AKA' authentication method, an EAP-TLS authentication method, or an EAP-TTLS authentication method.

In a possible design, the transceiver unit 920 is configured to receive an NSWO indication from the authentication service functional entity. The processing unit 910 is configured to ignore the NSWO indication when it is determined that the serving network name includes the identifier of the serving network.

In a possible design, the processing unit 910 is configured to: when the EAP authentication method is the EAP-AKA' authentication method, derive a cipher key CK and an integrity key IK based on a key K, and derive a CK' and an IK' based on the CK, the IK, and the serving network name. The transceiver unit 920 is configured to send the CK' and the IK' to the authentication service functional entity.

When the communication apparatus 900 is configured to implement functions of the AUSF in the method embodiment shown in FIG. 5, FIG. 6, or FIG. 8:
The transceiver unit 920 is configured to: obtain a serving network name and an identifier of a terminal device, where the serving network name includes information about an NSWO and an identifier of a serving network, the serving network is a network accessed by the terminal device in a non-3GPP access mode, and the serving network provides a service of the NSWO; and receive indication information from a data management functional entity, where the indication information indicates an EAP authentication method used to authenticate the terminal device. The processing unit 910 is configured to: when the EAP authentication method is an EAP-TLS authentication method or an EAP-TTLS authentication method, generate a first key based on the serving network name.

In a possible design, the first key is an MSK.

In a possible design, the processing unit 910 is configured to: generate the MSK based on a certificate associated with the EAP authentication method, and generate the first key based on the MSK and the serving network name.

In a possible design, the transceiver unit 920 is configured to receive a first request message from a non-seamless wireless local area network offload functional entity, where the first request message is used to request to authenticate the terminal device, and the first request message includes the serving network name and the identifier of the terminal device.

In a possible design, the transceiver unit 920 is configured to receive a first request message from a non-seamless wireless local area network offload functional entity, where the first request message is used to request to authenticate the terminal device, and the first request message includes the identifier of the terminal device. The processing unit 910 is configured to: determine the identifier of the serving network based on the identifier of the terminal device; and generate the serving network name based on the identifier of the serving network.

In a possible design, the processing unit 910 is configured to use an identifier included in the another domain part of the identifier of the terminal device as the identifier of the serving network, where the identifier of the terminal device is in the decorated network access identifier format.

In a possible design, the processing unit 910 is configured to use, as the identifier of the serving network, an identifier of a network to which the terminal device belongs when the identifier of the terminal device is in a network access identifier format that does not include another domain.

In a possible design, the first request message further includes an NSWO indication, and the processing unit 910 is configured to generate the serving network name based on the identifier of the serving network in response to the NSWO indication.

In a possible design, the processing unit 910 is configured to: when the EAP authentication method is an EAP-TLS authentication method or an EAP-TTLS authentication method, generate the serving network name based on the identifier of the serving network.

When the communication apparatus 900 is configured to implement functions of the terminal device in the method embodiments shown in FIG. 5 to FIG. 8:
The processing unit 910 is configured to obtain a serving network name, where the serving network name includes information about an NSWO and an identifier of a serving network, the serving network is a network accessed by a terminal device in a non-3GPP access mode, and the serving network provides a service of the NSWO. The transceiver unit 920 is configured to receive indication information from an authentication service functional entity, where the indication information indicates an EAP authentication method used to authenticate the terminal device. The processing unit 910 is configured to: when the EAP authentication method is an EAP-TLS authentication method or an EAP-TTLS authentication method, generate a first key based on the serving network name.

In a possible design, the transceiver unit 920 is configured to receive, from a non-3GPP access device, an identifier of a network to which the non-3GPP access device belongs. The processing unit 910 is configured to: use, as the identifier of the serving network, the identifier of the network to which the non-3GPP access device belongs, and generate the serving network name based on the identifier of the serving network.

In a possible design, the transceiver unit 920 is configured to receive the serving network name from the authentication service functional entity.

In a possible design, the transceiver unit 920 is configured to receive, from a non-3GPP access device, an identifier of a network to which the non-3GPP access device belongs. The processing unit 910 is configured to determine that the identifier of the network to which the non-3GPP access device belongs is consistent with the identifier of the serving network.

In a possible design, the first key is an MSK.

In a possible design, the processing unit 910 is configured to: generate the MSK based on a certificate associated with the EAP authentication method, and the terminal device generates the first key based on the MSK and the serving network name.

In a possible design, the processing unit 910 is configured to: when the EAP authentication method is the EAP-TLS authentication method or the EAP-TTLS authentication method, and the terminal device determines that the service of the NSWO is used, generate the first key based on the serving network name.

When the communication apparatus 900 is configured to implement functions of the AUSF in the method embodiment shown in FIG. 6:
The transceiver unit 920 is configured to receive a first request message from a non-seamless wireless local area network offload functional entity, where the first request message is used to request to authenticate a terminal device, and the first request message includes an identifier of the terminal device. The processing unit 910 is configured to: determine an identifier of a serving network based on the identifier of the terminal device, where the serving network is a network accessed by the terminal device in a non-3GPP access mode, and the serving network provides a service of an NSWO, and generate a serving network name, where the serving network name includes information about the NSWO and the identifier of the serving network. The transceiver unit 920 is configured to send the serving network name and the identifier of the terminal device to a data management functional entity.

In a possible design, the processing unit 910 is configured to generate the serving network name based on configuration information, where the configuration information indicates that the authentication service functional entity is deployed in a non-public network.

In a possible design, the processing unit 910 is configured to generate the serving network name when the identifier of the terminal device is an anonymous subscription concealed identifier.

In a possible design, the processing unit 910 is configured to generate the serving network name when the identifier of the terminal device is in a decorated network access identifier format.

In a possible design, the processing unit 910 is configured to: generate the serving network name when the identifier of the terminal device is in the decorated network access identifier format and another domain part of the identifier of the terminal device includes a public network identifier; or generate the serving network name when the identifier of the terminal device is in the decorated network access identifier format and another domain part of the identifier of the terminal device includes a non-public network identifier.

In a possible design, the processing unit 910 is configured to use an identifier included in the another domain part of the identifier of the terminal device as the identifier of the serving network, where the identifier of the terminal device is in the decorated network access identifier format.

In a possible design, the processing unit 910 is configured to use, as the identifier of the serving network, an identifier of a network to which the terminal device belongs when the identifier of the terminal device is in a network access identifier format that does not include another domain.

In a possible design, the first request message further includes an NSWO indication, and the processing unit 910 is configured to generate the serving network name in response to the NSWO indication.

In a possible design, the processing unit 910 is configured to: when the EAP authentication method is an EAP-TLS authentication method or an EAP-TTLS authentication method, generate the serving network name based on the identifier of the serving network.

When the communication apparatus 900 is configured to implement functions of the UDM in the method embodiment shown in FIG. 7:
The transceiver unit 920 is configured to receive an NSWO indication from an authentication service functional entity. The processing unit 910 is configured to: when it is determined that any one of a condition 1 to a condition 3 is met, determine, based on subscription information of a terminal device in response to the NWSO indication, an EAP authentication method used to authenticate the terminal device, where the EAP authentication method is one of the following: an EAP-AKA' authentication method, an EAP-TLS authentication method, or an EAP-TTLS authentication method. The condition 1 is that an identifier of a network to which the data management functional entity belongs is a non-public network identifier; the condition 2 is that an identifier of the terminal device is received from the authentication service functional entity, the identifier of the terminal device is in a decorated network access identifier format, and another domain part of the identifier of the terminal device includes a non-public network identifier; and the condition 3 is that an identifier of the terminal device is received from the authentication service functional entity, and the identifier of the terminal device is an anonymous SUCI of the terminal device. The transceiver unit 920 is configured to send indication information to the authentication service functional entity, where the indication information indicates the EAP authentication method.

In a possible design, the processing unit 910 is configured to: when the EAP authentication method is the EAP-AKA' authentication method, determine an identifier of a serving network based on the identifier of the terminal device, where the serving network is a network accessed by the terminal device in a non-3GPP access mode, and the serving network provides a service of the NSWO; generate a serving network name based on the identifier of the serving network, where the serving network name includes information about the NSWO and the identifier of the serving network; derive a CK and an IK based on a key K; and derive a CK' and an IK' based on the CK, the IK, and the serving network name. The transceiver unit 920 is configured to send the CK' and the IK' to the authentication service functional entity.

When the communication apparatus 900 is configured to implement functions of the AUSF in the method embodiment shown in FIG. 8:
The transceiver unit 920 is configured to: receive a first request message from a non-seamless wireless local area network offload functional entity, where the first request message is used to request to authenticate a terminal device, and the first request message includes an identifier of the terminal device; and receive indication information from a data management functional entity, where the indication information indicates an EAP authentication method used to authenticate the terminal device, and the EAP authentication method is one of the following: an EAP-AKA' authentication method, an EAP-TLS authentication method, or an EAP-TTLS authentication method.

The processing unit 910 is configured to: determine an identifier of a serving network based on the identifier of the terminal device after the indication information is received, and generate a serving network name, where the serving network is a network accessed by the terminal device in a non-3GPP access mode, the serving network provides a service of an NSWO, and the serving network name includes information about the NSWO and the identifier of the serving network.

In a possible design, the transceiver unit 920 is configured to: when the EAP authentication method is the EAP-AKA' authentication method, send the serving network name and the indication information to the terminal device.

In a possible design, the processing unit 910 is configured to: when the EAP authentication method is the EAP-TLS authentication method or the EAP-TTLS authentication method, generate a first key based on the serving network name.

For more detailed descriptions of the processing unit 910 and the transceiver unit 920, refer to the related descriptions in the method embodiments shown in FIG. 5 to FIG. 8.

As shown in FIG. 10, a communication apparatus 1000 includes a processor 1010 and an interface circuit 1020. The processor 1010 and the interface circuit 1020 are coupled to each other. It may be understood that the interface circuit 1020 may be a transceiver or an input/output interface. Optionally, the communication apparatus 1000 may further include a memory 1030, configured to: store instructions executed by the processor 1010, or store input data required by the processor 1010 to run the instructions, or store data generated after the processor 1010 runs the instructions.

When the communication apparatus 1000 is configured to implement the methods shown in FIG. 5 to FIG. 8, the processor 1010 is configured to implement functions of the processing unit 910, and the interface circuit 1020 is configured to implement functions of the transceiver unit 920.

It may be understood that, the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any conventional processor.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a base station or a terminal. Certainly, the processor and the storage medium may exist in a base station or terminal as discrete components.

All or some of the foregoing embodiments may be implemented through software, hardware, firmware, or any combination thereof. When software is used to implement the foregoing embodiments, all or some of the foregoing embodiments may be implemented in a form of a computer program product. The computer program product includes one or more computer programs or instructions. When the computer programs or instructions are loaded and executed on a computer, the procedures or functions in embodiments of this application are all or partially executed. The computer may be a general-purpose computer, a special-purpose computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that various numbers in embodiments of this application are merely used for differentiation for ease of description, and are not used to limit the scope of embodiments of this application. The sequence numbers of the foregoing processes do not mean execution sequences, and the execution sequences of the processes should be determined based on functions and internal logic of the processes.

## Claims

1. An authentication method, wherein the method comprises:
obtaining an identifier of a serving network and an identifier of a terminal device, wherein the serving network is a network accessed by the terminal device in a non-3rd generation partnership project 3GPP access mode, and the serving network provides a service of a non-seamless wireless local area network offload NSWO;
generating a serving network name, wherein the serving network name comprises information about the NSWO and the identifier of the serving network; and
sending a first request message to an authentication service functional entity, wherein the first request message is used to request to authenticate the terminal device, and the first request message comprises the serving network name and the identifier of the terminal device.

2. The method according to claim 1, wherein generating the serving network name comprises:
generating, by a non-seamless wireless local area network offload functional entity, the serving network name based on configuration information, wherein the configuration information indicates that the non-seamless wireless local area network offload functional entity is deployed in a non-public network.

3. The method according to claim 1, wherein generating the serving network name comprises:
generating the serving network name when the identifier of the terminal device is an anonymous subscription concealed identifier.

4. The method according to claim 1, wherein generating the serving network name comprises:
generating the serving network name when the identifier of the terminal device is in a decorated network access identifier format.

5. The method according to claim 4, wherein generating the serving network name when the identifier of the terminal device is in the decorated network access identifier format comprises:
generating the serving network name when the identifier of the terminal device is in the decorated network access identifier format and another domain part of the identifier of the terminal device comprises a public network identifier; or
generating the serving network name when the identifier of the terminal device is in the decorated network access identifier format and another domain part of the identifier of the terminal device comprises a non-public network identifier.

6. The method according to any one of claims 1 to 5, wherein obtaining the identifier of the serving network comprises:
receiving the identifier of the serving network from a non-3GPP access device.

7. The method according to any one of claims 1 to 5, wherein obtaining the identifier of the serving network comprises:
determining the identifier of the serving network based on the identifier of the terminal device.

8. The method according to claim 7, wherein determining the identifier of the serving network based on the identifier of the terminal device comprises:
using an identifier comprised in the another domain part of the identifier of the terminal device as the identifier of the serving network, wherein the identifier of the terminal device is in the decorated network access identifier format.

9. The method according to claim 7, wherein determining the identifier of the serving network based on the identifier of the terminal device comprises:
using, as the identifier of the serving network, an identifier of a network to which the terminal device belongs when the identifier of the terminal device is in a network access identifier format that does not comprise another domain.

10. The method according to any one of claims 1 to 9, wherein the information about the NSWO is represented by a fixed character string "5G:NSWO".

11. An authentication method, wherein the method comprises:
receiving a serving network name and an identifier of a terminal device from an authentication service functional entity, wherein the serving network name comprises information about an NSWO and an identifier of a serving network, the serving network is a network accessed by the terminal device in a non-3GPP access mode, and the serving network provides a service of the NSWO;
determining, based on the identifier of the serving network, an extensible authentication protocol EAP authentication method used to authenticate the terminal device; and
sending indication information to the authentication service functional entity, wherein the indication information indicates the EAP authentication method.

12. The method according to claim 11, wherein determining, based on the identifier of the serving network, the EAP authentication method used to authenticate the terminal device comprises:
when the identifier of the serving network is a public network identifier, determining that the EAP authentication method is an extensible authentication protocol authentication and key agreement EAP-AKA' authentication method; or
when the identifier of the serving network is a non-public network identifier, determining the EAP authentication method based on subscription information of the terminal device, wherein the EAP authentication method is one of the following: an EAP-AKA' authentication method, an extensible authentication protocol transport layer security EAP-TLS authentication method, or an extensible authentication protocol tunneled transport layer security EAP-TTLS authentication method.

13. The method according to claim 11 or 12, further comprising:
receiving an NSWO indication from the authentication service functional entity.

14. The method according to claim 13, further comprising: ignoring the NSWO indication if it is determined that the serving network name comprises the identifier of the serving network.

15. The method according to claim 12, further comprising:
when the EAP authentication method is the EAP-AKA' authentication method, deriving a cipher key CK and an integrity key IK based on a key K;
deriving a CK' and an IK' based on the CK, the IK, and the serving network name; and
sending the CK' and the IK' to the authentication service functional entity.

16. An authentication method, wherein the method comprises:
obtaining a serving network name and an identifier of a terminal device, wherein the serving network name comprises information about an NSWO and an identifier of a serving network, the serving network is a network accessed by the terminal device in a non-3GPP access mode, and the serving network provides a service of the NSWO;
receiving indication information from a data management functional entity, wherein the indication information indicates an EAP authentication method used to authenticate the terminal device; and
when the EAP authentication method is an EAP-TLS authentication method or an EAP-TTLS authentication method, generating a first key based on the serving network name.

17. The method according to claim 16, wherein the first key is a master session key MSK.

18. The method according to claim 16, wherein the generating the first key based on the serving network name comprises:
generating an MSK based on a certificate associated with the EAP authentication method; and
generating the first key based on the MSK and the serving network name.

19. The method according to any one of claims 16 to 18, wherein obtaining the serving network name and the identifier of the terminal device comprises:
receiving a first request message from a non-seamless wireless local area network offload functional entity, wherein the first request message is used to request to authenticate the terminal device, and the first request message comprises the serving network name and the identifier of the terminal device.

20. The method according to any one of claims 16 to 18, wherein obtaining the serving network name comprises:
receiving a first request message from a non-seamless wireless local area network offload functional entity, wherein the first request message is used to request to authenticate the terminal device, and the first request message comprises the identifier of the terminal device;
determining the identifier of the serving network based on the identifier of the terminal device; and
generating the serving network name based on the identifier of the serving network.

21. The method according to claim 20, wherein determining the identifier of the serving network based on the identifier of the terminal device comprises:
using an identifier comprised in another domain part of the identifier of the terminal device as the identifier of the serving network, wherein the identifier of the terminal device is in a decorated network access identifier format.

22. The method according to claim 20, wherein determining the identifier of the serving network based on the identifier of the terminal device comprises:
using, as the identifier of the serving network, an identifier of a network to which the terminal device belongs when the identifier of the terminal device is in a network access identifier format that does not comprise another domain.

23. The method according to any one of claims 20 to 22, wherein the first request message further comprises an NSWO indication; and
the generating the serving network name based on the identifier of the serving network comprises:
generating the serving network name based on the identifier of the serving network in response to the NSWO indication.

24. The method according to any one of claims 20 to 23, wherein generating the serving network name based on the identifier of the serving network comprises:
when the EAP authentication method is the EAP-TLS authentication method or the EAP-TTLS authentication method, generating the serving network name based on the identifier of the serving network.

25. An authentication method, applied to a terminal device or a chip in a terminal device, wherein the method comprises:
obtaining a serving network name, wherein the serving network name comprises information about an NSWO and an identifier of a serving network, the serving network is a network accessed by the terminal device in a non-3GPP access mode, and the serving network provides a service of the NSWO;
receiving indication information from an authentication service functional entity, wherein the indication information indicates an EAP authentication method used to authenticate the terminal device; and
when the EAP authentication method is an EAP-TLS authentication method or an EAP-TTLS authentication method, generating a first key based on the serving network name.

26. The method according to claim 25, wherein obtaining the serving network name comprises:
receiving, from a non-3GPP access device, an identifier of a network to which the non-3GPP access device belongs, and using, as the identifier of the serving network, the identifier of the network to which the non-3GPP access device belongs; and
generating the serving network name based on the identifier of the serving network.

27. The method according to claim 25, wherein obtaining the serving network name comprises:
receiving the serving network name from the authentication service functional entity.

28. The method according to claim 27, further comprising:
receiving, from a non-3GPP access device, an identifier of a network to which the non-3GPP access device belongs; and
determining that the identifier of the network to which the non-3GPP access device belongs is consistent with the identifier of the serving network.

29. The method according to any one of claims 25 to 28, wherein the first key is an MSK.

30. The method according to any one of claims 25 to 28, wherein the generating the first key based on the serving network name comprises:
generating an MSK based on a certificate associated with the EAP authentication method; and
generating the first key based on the MSK and the serving network name.

31. The method according to any one of claims 25 to 30, wherein generating the first key based on the serving network name comprises:
when the EAP authentication method is the EAP-TLS authentication method or the EAP-TTLS authentication method, and it is determined that the service of the NSWO is used, generating the first key based on the serving network name.

32. An authentication method, wherein the method comprises:
receiving a first request message from a non-seamless wireless local area network offload functional entity, wherein the first request message is used to request to authenticate a terminal device, and the first request message comprises an identifier of the terminal device;
determining an identifier of a serving network based on the identifier of the terminal device, wherein the serving network is a network accessed by the terminal device in a non-3GPP access mode, and the serving network provides a service of an NSWO;
generating a serving network name, wherein the serving network name comprises information about the NSWO and the identifier of the serving network; and
sending the serving network name and the identifier of the terminal device to a data management functional entity.

33. The method according to claim 32, wherein generating the serving network name comprises:
generating the serving network name based on configuration information, wherein the configuration information indicates that the authentication service functional entity is deployed in a non-public network.

34. The method according to claim 32, wherein generating the serving network name comprises:
generating the serving network name when the identifier of the terminal device is an anonymous subscription concealed identifier SUCI.

35. The method according to claim 32, wherein generating the serving network name comprises:
generating the serving network name when the identifier of the terminal device is in a decorated network access identifier format.

36. The method according to claim 32, wherein generating the serving network name comprises:
generating the serving network name when the identifier of the terminal device is in the decorated network access identifier format and another domain part of the identifier of the terminal device comprises a public network identifier; or generating the serving network name when the identifier of the terminal device is in the decorated network access identifier format and another domain part of the identifier of the terminal device comprises a non-public network identifier.

37. The method according to claim 32, wherein generating the serving network name comprises:
when an EAP authentication method is an EAP-TLS authentication method or an EAP-TTLS authentication method, generating the serving network name based on the identifier of the serving network.

38. The method according to any one of claims 32 to 37, wherein the first request message further comprises an NSWO indication; and
generating the serving network name comprises:
generating the serving network name in response to the NSWO indication.

39. The method according to any one of claims 35 to 37, further comprising:
using an identifier comprised in the another domain part of the identifier of the terminal device as the identifier of the serving network, wherein the identifier of the terminal device is in the decorated network access identifier format.

40. The method according to any one of claims 31 to 37, further comprising:
using, as the identifier of the serving network, an identifier of a network to which the terminal device belongs when the identifier of the terminal device is in a network access identifier format that does not comprise another domain.

41. An authentication method, wherein the method comprises:
receiving an NSWO indication from an authentication service functional entity;
when it is determined that any one of a condition 1 to a condition 3 is met, determining, based on subscription information of a terminal device in response to the NWSO indication, an EAP authentication method used to authenticate the terminal device, wherein the EAP authentication method is one of the following: an EAP-AKA' authentication method, an EAP-TLS authentication method, and an EAP-TTLS authentication method, wherein
the condition 1 is that an identifier of a network to which a data management functional entity belongs is a non-public network identifier; the condition 2 is that an identifier of the terminal device is received from the authentication service functional entity, the identifier of the terminal device is in a decorated network access identifier format, and another domain part of the identifier of the terminal device comprises a non-public network identifier; and the condition 3 is that an identifier of the terminal device is received from the authentication service functional entity, and the identifier of the terminal device is an anonymous SUCI of the terminal device; and
sending indication information to the authentication service functional entity, wherein the indication information indicates the EAP authentication method.

42. The method according to claim 41, further comprising:
when the EAP authentication method is the EAP-AKA' authentication method, determining an identifier of a serving network based on the identifier of the terminal device, wherein the serving network is a network accessed by the terminal device in a non-3GPP access mode, and the serving network provides a service of the NSWO; generating a serving network name based on the identifier of the serving network, wherein the serving network name comprises information about the NSWO and the identifier of the serving network; deriving a CK and an IK based on a key K; deriving a CK' and an IK' based on the CK, the IK, and the serving network name; and sending the CK' and the IK' to the authentication service functional entity.

43. An authentication method, wherein the method comprises:
receiving a first request message from a non-seamless wireless local area network offload functional entity, wherein the first request message is used to request to authenticate a terminal device, and the first request message comprises an identifier of the terminal device;
receiving indication information from a data management functional entity, wherein the indication information indicates an EAP authentication method used to authenticate the terminal device, and the EAP authentication method is one of the following: an EAP-AKA' authentication method, an EAP-TLS authentication method, and an EAP-TTLS authentication method; and
determining an identifier of a serving network based on the identifier of the terminal device after the indication information is received, and generating a serving network name, wherein the serving network is a network accessed by the terminal device in a non-3GPP access mode, the serving network provides a service of an NSWO, and the serving network name comprises information about the NSWO and the identifier of the serving network.

44. The method according to claim 43, further comprising:
when the EAP authentication method is the EAP-AKA' authentication method, sending the serving network name and the indication information to the terminal device.

45. The method according to claim 43, further comprising:
when the EAP authentication method is the EAP-TLS authentication method or the EAP-TTLS authentication method, generating a first key based on the serving network name.

46. An authentication method, wherein the method comprises:
obtaining, by a non-seamless wireless local area network offload functional entity, an identifier of a serving network and an identifier of a terminal device, wherein the serving network is a network accessed by the terminal device in a non-3GPP access mode, and the serving network provides a service of an NSWO; and generating, by the non-seamless wireless local area network offload functional entity, a serving network name, wherein the serving network name comprises information about the NSWO and the identifier of the serving network;
sending, by the non-seamless wireless local area network offload functional entity, a first request message to an authentication service functional entity, wherein the first request message is used to request to authenticate the terminal device, and the first request message comprises the serving network name and the identifier of the terminal device;
after the authentication service functional entity receives the first request message from the non-seamless wireless local area network offload functional entity, sending, by the authentication service functional entity, the serving network name and the identifier of the terminal device to a data management functional entity;
after the data management functional entity receives the serving network name and the identifier of the terminal device from the authentication service functional entity, determining, by the data management functional entity based on the identifier of the serving network, an EAP authentication method used to authenticate the terminal device;
sending, by the data management functional entity, indication information to the authentication service functional entity, wherein the indication information indicates the EAP authentication method; and
sending, by the authentication service functional entity, the indication information to the terminal device; and generating, by the terminal device, a key based on the serving network name after the terminal device receives the indication information from the authentication service functional entity.

47. The method according to claim 46, further comprising:
after the authentication service functional entity receives the indication information from the data management functional entity, when the EAP authentication method is an EAP-TLS authentication method or an EAP-TTLS authentication method, generating, by the authentication service functional entity, a first key based on the serving network name; or when the EAP authentication method is an EAP-TLS authentication method or an EAP-TTLS authentication method, generating, by the terminal device, a first key based on the serving network name.

48. The method according to claim 46, further comprising:
when the EAP authentication method is an EAP-AKA' authentication method, deriving, by the data management functional entity, a CK and an IK based on a key K, and deriving a CK' and an IK' based on the CK, the IK, and the serving network name; further sending, by the data management functional entity, an SUPI of the terminal device, the CK', and the IK' to the authentication service functional entity; after the authentication service functional entity receives the indication information, the SUPI of the terminal device, the CK', and the IK' from the data management functional entity, generating, by the authentication service functional entity, an MSK based on the SUPI of the terminal device, the CK', and the IK'; and further sending, by the authentication service functional entity, the serving network name to the terminal device; or when the EAP authentication method is the EAP-AKA' authentication method, deriving, by the terminal device, the CK and the IK based on the key K, deriving the CK' and the IK' based on the CK, the IK, and the serving network name, and generating the MSK based on the SUPI of the terminal device, the CK', and the IK'.

49. An authentication method, wherein the method comprises:
receiving, by an authentication service functional entity, a first request message from a non-seamless wireless local area network offload functional entity, wherein the first request message is used to request to authenticate a terminal device, the first request message comprises an identifier of the terminal device; determining, by the authentication service functional entity, an identifier of a serving network based on the identifier of the terminal device, wherein the serving network is a network accessed by the terminal device in a non-3GPP access mode, and the serving network provides a service of a NSWO; generating, by the authentication service functional entity, a serving network name, wherein the serving network name comprises information about the NSWO and the identifier of the serving network; sending, by the authentication service functional entity, the serving network name and the identifier of the terminal device to a data management functional entity; after the data management functional entity receives the serving network name and the identifier of the terminal device from the authentication service functional entity, determining, by the data management functional entity based on the identifier of the serving network, an EAP authentication method used to authenticate the terminal device; sending, by the data management functional entity, indication information to the authentication service functional entity, wherein the indication information indicates the EAP authentication method; sending, by the authentication service functional entity, the indication information to the terminal device; and after the terminal device receives the indication information from the authentication service functional entity, generating, by the terminal device, a key based on the serving network name.

50. The method according to claim 49, further comprising:
after the authentication service functional entity receives the indication information from the data management functional entity, when the EAP authentication method is an EAP-TLS authentication method or an EAP-TTLS authentication method, generating, by the authentication service functional entity, a first key based on the serving network name; or when the EAP authentication method is an EAP-TLS authentication method or an EAP-TTLS authentication method, generating, by the terminal device, a first key based on the serving network name.

51. The method according to claim 49, further comprising:
when the EAP authentication method is an EAP-AKA' authentication method, deriving, by the data management functional entity, a CK and an IK based on a key K, and deriving a CK' and an IK' based on the CK, the IK, and the serving network name; further sending, by the data management functional entity, an SUPI of the terminal device, the CK', and the IK' to the authentication service functional entity; after the authentication service functional entity receives the indication information, the SUPI of the terminal device, the CK', and the IK' from the data management functional entity, generating, by the authentication service functional entity, an MSK based on the SUPI of the terminal device, the CK', and the IK'; and further sending, by the authentication service functional entity, the serving network name to the terminal device; or when the EAP authentication method is the EAP-AKA' authentication method, deriving, by the terminal device, the CK and the IK based on the key K, deriving the CK' and the IK' based on the CK, the IK, and the serving network name, and generating the MSK based on the SUPI of the terminal device, the CK', and the IK'.

52. A communication apparatus, wherein the communication apparatus is configured to perform the method according to any one of claims 1 to 45.

53. A chip, wherein the chip is coupled to a memory, and the chip reads a computer program stored in the memory, to perform the method according to any one of claims 1 to 45.

54. A computer-readable storage medium, wherein the storage medium stores a computer program or instructions, and when the computer program or the instructions are executed by a communication apparatus, the method according to any one of claims 1 to 45 is implemented.

55. A communication system, wherein the system comprises at least two of the following apparatuses: a non-seamless wireless local area network offload functional entity, an authentication service functional entity, a data management functional entity, and a terminal device, wherein the non-seamless wireless local area network offload functional entity is configured to perform the method according to any one of claims 1 to 10, the data management functional entity is configured to perform the method according to any one of claims 11 to 15, or the method according to claim 41 or 42, the authentication service functional entity is configured to perform the method according to any one of claims 16 to 24, or the method according to any one of claims 32 to 40, or the method according to any one of claims 43 to 45, and the terminal device performs the method according to any one of claims 25 to 31.

56. A computer program product, wherein the computer program product comprises a program or instructions, and when the program or the instructions are executed, the method according to any one of claims 1 to 45 is implemented..
